# EUROPEAN PATENT SPECIFICATION

(11) **EP 2 174 406 B1**
(45) Date of publication and mention of the grant of the patent: **27.10.2010**
(21) Application number: 08854785.6
(22) Date of filing: 20.11.2008
(51) Int. Cl.: H02K 15/04

(54) **WINDING APPARATUS**
WICKELVORRICHTUNG
BOBINEUSE

(30) Priority: 29.11.2007 JP 2007309167
(43) Date of publication of application: 14.04.2010
(73) Proprietor: Toyota Jidosha Kabushiki Kaisha, Toyota-shi, Aichi 471-8571 (JP)
(72) Inventor: SUGISHIMA, Sakae, Toyota-shi Aichi 471-8571 (JP)
(74) Representative: Albutt, Anthony John
(86) International application number: PCT/JP2008/071596
(87) International publication number: WO 2009/069723

(56) References cited:
- JP-A- 2002 184 639
- JP-A- 2004 080 860
- JP-A- 2005 102 356
- JP-A- 2005 130 645
- JP-A- 2006 288 025

## Description

### TECHNICAL FIELD

The present invention relates to a technique for efficiently winding a coil by use of an edgewise winding apparatus.

### BACKGROUND ART

As a coil to be used in a rotary electric machine, there is a wound coil made of a flat wire having a rectangular cross section besides a wound coil made of a wire having a circular cross section. To increase an amount of electric current allowed to flow in the coil, the coil must be formed of a thick wire. Such increase in cross sectional area of the wire tends to deteriorate a space factor of the wound coil made of the circular cross-section wire. On the other hand, the wound coil made of the rectangular cross-section wire is less likely to deteriorate a space factor even when the wire has a larger cross sectional area.

The coil for use in the rotary electric machine to be mounted in a vehicle is heretofore required to be compact and have high performance. In particular, the rotary electric machine used in a vehicle driving section has to be supplied with a large amount of current, whereas the rotary electric machine has a severe limitation in size because it needs to be installed in an engine room. Accordingly, the coil made of the flat wire having a rectangular cross section capable of enhancing the space factor is preferably used in a vehicle-mounted drive motor.

However, such rotary electric machine needs a coil of a non-circular outer shape, more preferably, of an outer shape as near as possible to a rectangular shape in order to shorten the length of a coil end. Such non-circular coil is likely to cause various problems due to a difference in winding speed between a long side portion and a short side portion. If winding is done at an extreme low speed, even a non-circular coil could be wound easily. However, for enhancing productivity, the non-circular coil must be wound at high speed.

JP2002-184639A discloses a technique for producing a coil from such a flat wire. This technique winds the flat wire on an elliptic cylindrical winding core by rotating the core. The flat wire is thus wound on the winding core to follow the shape of the winding core. Furthermore, the flat wire is pressed by a retaining member against a fixing member that rotates together with the winding core to restrain expansion of the flat wire and vibration or wobble of the wire during winding.

This retaining member is slidable in a thickness direction of a coil to be produced. As the winding of the flat wire is advanced, the retaining member will move apart from the fixing member. A brake means is provided at a predetermined position perpendicular to the winding core to cause resistance in movement of the flat wire. This brake means is movable together with the retaining member in an axis direction of the winding core. The flat wire is wound as pressed by the retaining member in such a way. Accordingly, during winding of the flat wire on the elliptic cylindrical winding core, it is possible to prevent inertia vibration or wobble of the flat wire due to a difference in winding speed in a long side portion and a short side portion, and hence achieve high speed coil winding.

JP2006-288025A discloses a technique related to a rectangular coil, a rectangular coil manufacturing method, and a rectangular coil manufacturing apparatus. A bending device for edgewise bending a rectangular flat wire includes holding means for clamping a linear flat wire, the holding means having a groove equal in width to the flat wire, roller-shaped restriction means which will come into contact with an inner periphery of the flat wire during edgewise bending, and pressing means which will come into contact with an outer periphery of the flat wire during the edgewise bending and rotate to edgewise bend the flat wire.

The flat wire is passed through the bending device and the pressing means is rotated to edgewise bend a predetermined portion of the flat wire. Then, the flat wire is fed until another portion for the next edgewise bending comes to a predetermined place and the same operation is repeated. By repetition of such operation, a coil made of the flat wire by edgewise bending is thus produced.

### DISCLOSURE OF INVENTION

### PROBLEMS TO BE SOLVED BY THE INVENTION

The techniques disclosed in JP2002-184639A and JP2006-288025A to produce a coil from the flat wire may cause the following disadvantages.

In the case of producing a coil by the method disclosed in JP2002-184639A, the inner periphery of the coil is shaped conforming to the shape of the winding core. For insertion of the coil in a stator or the like, however, there is a demand for enhancing a space factor as high as possible. Therefore, it is preferable to produce a coil having a trapezoidal outer shape instead of the elliptic cylindrical shape. However, if the winding core is of a cone shape, the retaining member is not allowed to move. The method of JP2002-184639A could not directly be applied to winding of the trapezoidal coil.

When the length difference in a long side portion and a short side portion of the coil is larger, the inertia vibration of the flat wire inevitably becomes so large that the method of JP2002-184639A may not sufficiently absorb the inertial vibration. However, the larger number of coils is more advantageous in enhancing power of the rotary electric machine and achieving smooth operation thereof. For this end, the coil has to be designed with a large length difference between the long side portion and the short side portion.

On the other hand, the method of JP2006-288025A also can produce a coil having a large length difference between the long side portion and the short side portion. In the configuration of JP2006-288025A, however, after rotated, the pressing means has to be returned to an initial position prior to feeding of the flat wire; otherwise, the flat wire could not be fed.

Specifically, the edgewise bending of the flat wire needs to rotate the pressing means, return the pressing means to a predetermined position after the bending is finished, feed the flat wire, and rotate the pressing means again. To provide the rotary electric machine at low cost, it is essential to reduce the cost of a plurality of coils used in one rotary electric machine. For cost reduction, the coils have to be produced at high speed. However, the method of JP2006-288025A needs the operation of rotating and returning the pressing means. This operation will disturb high speed winding.

In other words, it appears that the technique of JP2002-184639A could not easily produce the coil having a large length difference in length between the long side portion and the short side portion and the technique of JP2006-288025A could not easily wind the coil at high speed.

A recent motor mounted in a hybrid electric vehicle or the like is required to output high power and also to be compact in size. Furthermore, price competitiveness of a product is also demanded. It is desired to realize high speed winding of a coil having a large difference between a long side portion and a short side portion.

To solve the above problems, the present invention has an object to a winding apparatus arranged to wind a coil including a bent portion and an unbent portion at high speed.
Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

### MEANS FOR SOLVING THE PROBLEMS

(1) To achieve the above object, the invention provides a winding apparatus for producing a coil including a plurality of bent portions having equal bending angles and unbent portions each existing between the bent portions, the apparatus being arranged to wind a wire into a non-circular form by edgewise bending, the apparatus comprising: a holding member arranged to contact with an inner periphery surface of the wire which will form an inner periphery of the coil, the holding member being configured to clamp one of the bent portions of the wire in a direction of thickness of the wire; and a bending member arranged to contact with an outer periphery surface of the wire which will form an outer periphery of the coil and rotate around the holding member while holding the wire in cooperation with the holding member to bent the wire to form the bent portion, the bending member being configured to move forward and backward in a direction of lamination of the wire, and the bending member including a plurality of bending members placed at equal angular intervals around the holding member so as to be movable around the holding member, the number of bending members being equal to the number of bent portions or unbent portions of one turn of the coil.

Edgewise bending of the wire is carried out by the holding member and the bending member. The holding member will be fixed with a clearance corresponding to the thickness of the wire to keep the thickness of the wire constant and will contact with the inner periphery surface of the wire. In other words, the holding member will contact with three surfaces of the wire in an angular U-shape in section. The holding member may be arranged to slightly press the wire in the thickness direction thereof to prevent displacement.

The bending members movable forward and backward in the lamination direction of the wire are provided in plural places around the holding member. Accordingly, there is no need for the returning step of the pressing means disclosed in JP2006-288025A corresponding to the bending member. This makes it possible to shorten the time required for winding the coil.

The bending members are placed to surround the outer periphery of the holding member and be rotatable around the holding member by keeping the equal angular intervals from each other. For instance, the wire is edgewise bent by a first bending member moved forward (advanced) in a direction perpendicular to a rotation direction and then the first bending member is moved backward (retracted). The wire is fed by a predetermined distance and a second bending member is moved forward to perform edgewise bending. In other words, the bending members are rotated every time in one way and advanced or retracted in the direction perpendicular to the rotation direction to enable edgewise bending. As a result, the time required for returning is saved.

In the case of producing a rectangular coil by winding a wire by ten turns (ten layers), assuming that 0.2 second is saved per one edgewise bending (at one corner), total 8 seconds can be saved in producing each coil.

In the technique disclosed in JP2006-288025A, the pressing means corresponding to the bending member has to be returned by the same distance as the bending angle. This takes simply two times longer than above. Even considering a feeding time of the wire, the time loss of the returning step conceivably occupies a large ratio of the total time needed for producing the coil. Therefore, the above configuration of the invention needing no returning step can achieve speed-up.

The holding member and the bending member are operated in cooperation to perform edgewise bending of the wire. Accordingly, a coil having a large difference between a long side portion and a short side portion can be produced appropriately.

(2) Preferably, the above winding apparatus further comprises an anti-vibration member to be placed in contact with part of the inner periphery surface of the wire, the anti-vibration member being rotatable in association with winding of the wire to prevent deformation of the coil.

The coil is wound by being rotated by the bending members and the holding member. Thus, the coil is formed by being rotated while its rotation center is moved. In the case of winding the coil at high speed, because of a natural frequency of the wire and other reasons, the wire tends to largely vibrate or wobble as the winding speed increases. The anti-vibration member serves to restrain such vibration of the coil. This anti-vibration member is arranged to rotate together with the coil while pressing against the inner periphery of the coil, thereby preventing deformation of the coil. It is therefore possible to restrain vibration or wobble of the coil and deformation thereof during winding and hence achieve high-speed coil winding.

(3) Preferably, in the winding apparatus (2), the anti-vibration member includes slant surfaces complying to slant side surfaces of the coil to be produced so that a winding diameter of the coil is gradually decreased, and the anti-vibration member is arranged to rotate, in sync with winding of the wire, while the anti-vibration member slides forward and backward in a turning direction of the coil in the process of being formed.

Accordingly, the coil having a trapezoidal cross section whose winding diameter gradually becomes smaller can be produced. In the case where the coil is mounted in a stator of a rotary electric machine, the coil shape is preferred to be trapezoidal in cross section with the winding diameter becoming gradually smaller with the object of enhancing a space factor.

(4) In the winding apparatus of one of (1) to (3), preferably, the bending member includes an angle correcting system for correcting a rotation angle, the angle correcting system being arranged to correct the rotation angle of the bending member during edgewise bending of the wire.

Accordingly, for 90° edgewise bending of a wire, for example, the bending members are rotated by an angle of 90°+α to absorb spring-back caused by material characteristics such as a spring property of the wire. Thus, the wire can be accurately edgewise bent at a desired angle.

### BRIEF DESCRIPTION OF DRAWINGS

The accompanying drawings, which are incorporated in and constitute a part of this specification illustrate an embodiment of the invention and, together with the description, serve to explain the objects, advantages and principles of the invention.
In the drawings,
Fig. 1 is a plan view of an edgewise winding apparatus in a first embodiment;
Fig. 2 is a side view of the edgewise winding apparatus in the first embodiment;
Fig. 3 is a perspective view of a coil in the first embodiment;
Fig. 4 is a sectional view of a bending system in the first embodiment;
Fig. 5 is a sectional view of a coil-long-side feed slider of a feed system in the first embodiment;
Fig. 6 is a sectional view of a coil-short-side feed slider of the feed system in the first embodiment;
Fig. 7 is a view showing a connected state of the feed system and the bending system in the first embodiment;
Fig. 8 is an enlarged sectional view of the bending system in the first embodiment;
Fig. 9 is a schematic view of a first step for a first turn (layer) in a coil winding process in the first embodiment;
Fig. 10 is a schematic view of a second step for the first turn (layer) in the coil winding process in the first embodiment;
Fig. 11 is a schematic view of a third step for the first turn in the coil winding process in the first embodiment;
Fig. 12 is a schematic view of a fourth step for the first turn in the coil winding process in the first embodiment;
Fig. 13 is a schematic view of a fifth step for the first turn in the coil winding process in the first embodiment;
Fig. 14 is a schematic view of a sixth step for the first turn in the coil winding process in the first embodiment;
Fig. 15 is a schematic view of a seventh step for the first turn in the coil winding process in the first embodiment;
Fig. 16 is a schematic view of an eighth step for the first turn in the coil winding process in the first embodiment;
Fig. 17 is a schematic view of a first step for a second turn in the coil winding process in the first embodiment;
Fig. 18 is a sectional side view showing a state where an anti-vibration jig is inserted in the first embodiment;
Fig. 19 is an enlarged sectional view of a rotary table and its surrounding in a state where the anti-vibration jig is inserted in the first embodiment;
Fig. 20 is a sectional side view showing a state where the anti-vibration jig is removed from the coil in the first embodiment;
Fig. 21 is a schematic view for a first step of movement of the anti-vibration jig in the first embodiment;
Fig. 22 is a schematic view for a second step of the movement of the anti-vibration jig in the first embodiment;
Fig. 23 is a schematic view for a third step of the movement of the anti-vibration jig in the first embodiment;
Fig. 24 is a schematic view for a fourth step of the movement of the anti-vibration jig in the first embodiment;
Fig. 25 is a schematic view for a fifth step of the movement of the anti-vibration jig in the first embodiment;
Fig. 26 is a schematic view for a sixth step of the movement of the anti-vibration jig in the first embodiment;
Fig. 27 is a schematic view for a seventh step of the movement of the anti-vibration jig in the first embodiment;
Fig. 28 is a schematic view for an eighth step of the movement of the anti-vibration jig in the first embodiment;
Fig. 29 is a timing chart of the edgewise winding apparatus in winding a coil in the first embodiment;
Fig. 30 is a plan view of an edgewise winding apparatus in a second embodiment;
Fig. 31 is a side view of the edgewise winding apparatus in the second embodiment;
Fig. 32 is a view showing power transmission in the edgewise winding apparatus in the second embodiment;
Fig. 33 is a sectional view of a bending system in the second embodiment;
Fig. 34 is a sectional view of a coil-long-side feed slider of a feed system in the second embodiment;
Fig. 35 is a sectional view of a coil-short-side feed slider of the feed system in the second embodiment;
Fig. 36 is a partial enlarged sectional view of the bending system in the second embodiment;
Fig. 37 is a plan view of a feed drive pin wheel and a feed drive Geneva wheel in the second embodiment;
Fig. 38 is a plan view of a coil-bending pin wheel and a coil-bending Geneva wheel in the second embodiment;
Fig. 39 is a plan view of a pin wheel for long-side feed of anti-vibration jig and a Geneva wheel for long-side feed of anti-vibration jig in the second embodiment; and
Fig. 40 is a timing chart showing movements of a Geneva mechanism in the second embodiment.

### BEST MODE FOR CARRYING OUT THE INVENTION

A detailed description of a preferred embodiment of the present invention will now be given referring to the accompanying drawings.

### <First Embodiment>

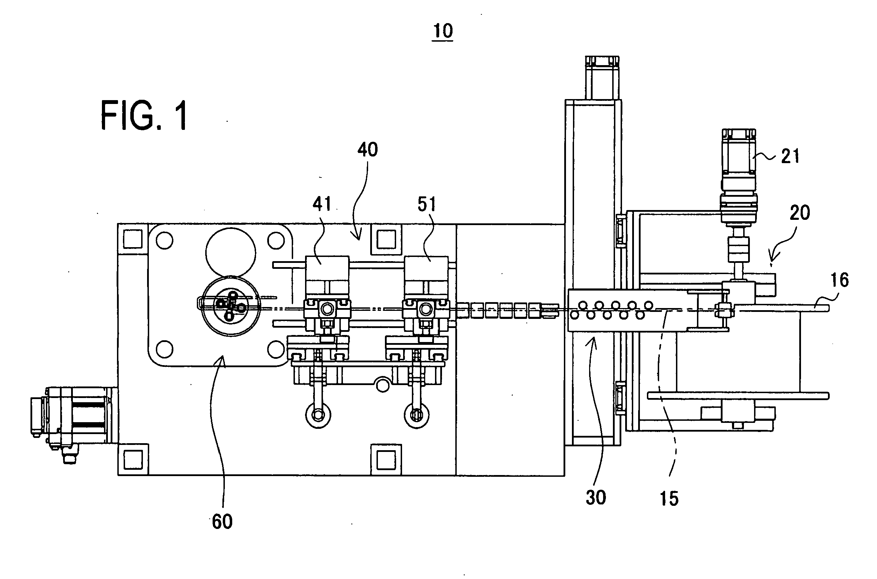

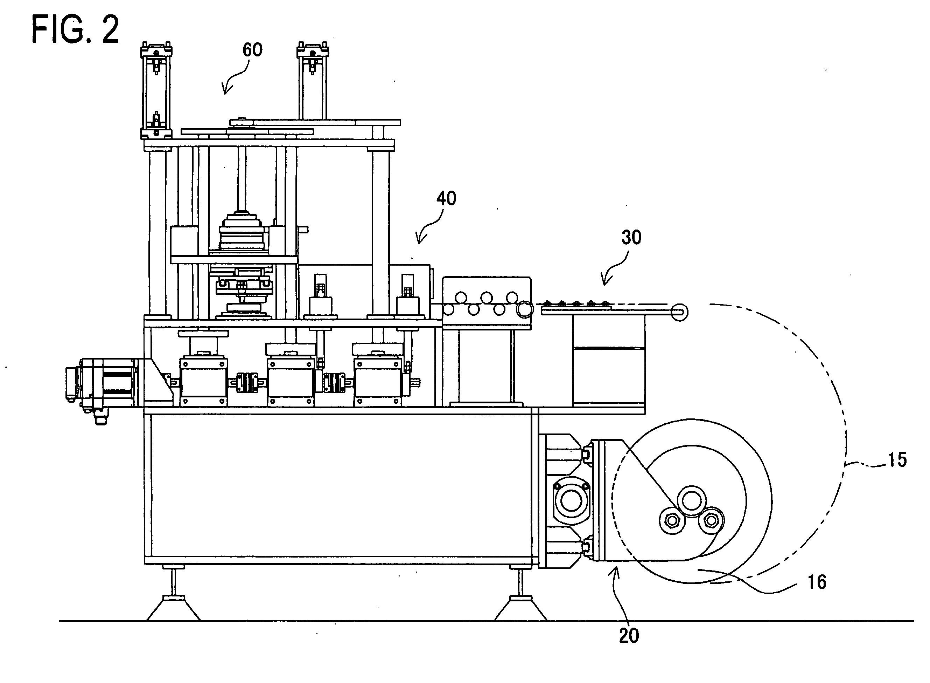

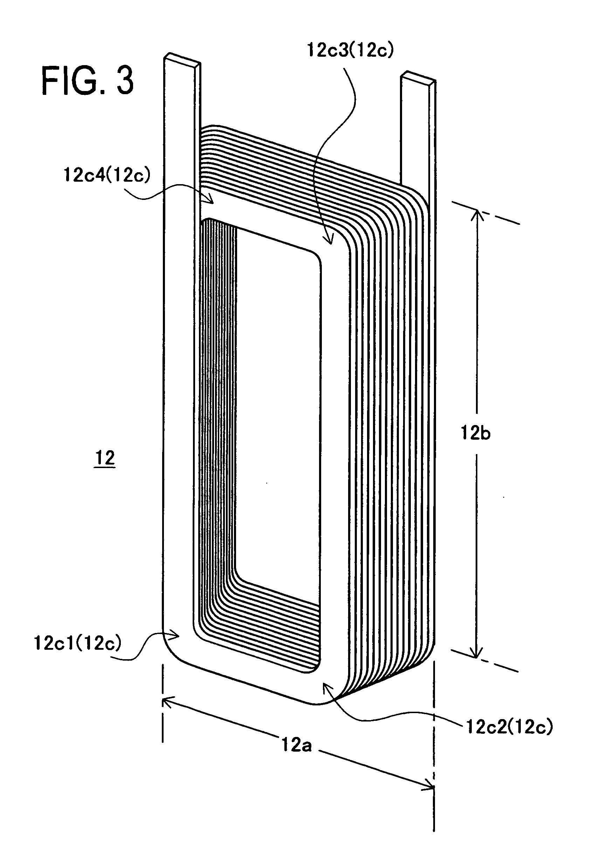

Fig. 1 is a plan view of an edgewise winding apparatus 10 in a first embodiment. Fig. 2 is a side view of the edgewise winding apparatus 10. Fig. 3 is a perspective view of a coil 12. In Figs. 1 and 2, the apparatus 10 is partly omitted in terms of scale size.

The edgewise winding apparatus 10 includes an uncoiler 20, a straightening system 30, a feed system 40, and a bending system 60. This apparatus 10 is arranged to perform edgewise bending of a flat wire 15 which is a conductor having a rectangular cross section to produce the coil 12. The coil 12 is a rectangularly wound coil as shown in Fig. 3 including short side portions 12a and long side portions 12b. Those short side portions 12a and long side portions 12b correspond to unbent portions existing between bent portions 12c.

Each long side portion 12b has a length several times longer than each short side portion 12a. The bent portions 12c exist at four places per one turn (one layer) of the coil 12. They are referred to as a first bent portion 12c1, a second bent portion 12c2, a third bent portion 12c3, and a fourth bent portion 12c4 respectively. The coil 12 is formed to be trapezoidal in section so that each short side portion 12a gradually becomes longer as the short side portions 12a are laminated.

The uncoiler 20 has a function of unreeling the flat wire 15 from on a bobbin 16. On the bobbin 16, the flat wire 15 having a rectangular cross section is wound in advance. The flat wire 15 is wound in such a way that a long side of its cross section is parallel with a winding axis of the bobbin 16. This flat wire 15 is covered with insulation coating such as polyimide and amideimide before being wound on the bobbin 16.

The flat wire 15 has been curled by being wound on the bobbin 16. Accordingly, the straightening system 30 is used to straighten the curled flat wire 15 after being unreeled from the bobbin 16. This system 30 includes a plurality of rollers for straightening the flat wire 15 passing through between the rollers. The feed system 40 is arranged to feed the flat wire 15 by an arbitrary distance. The bending system 60 is arranged to edgewise bend the flat wire 15.

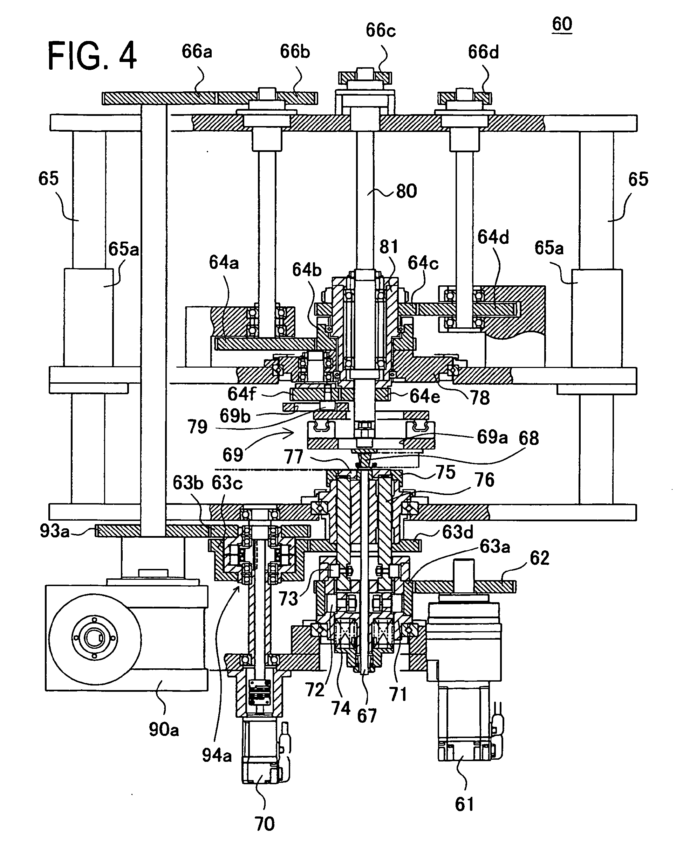

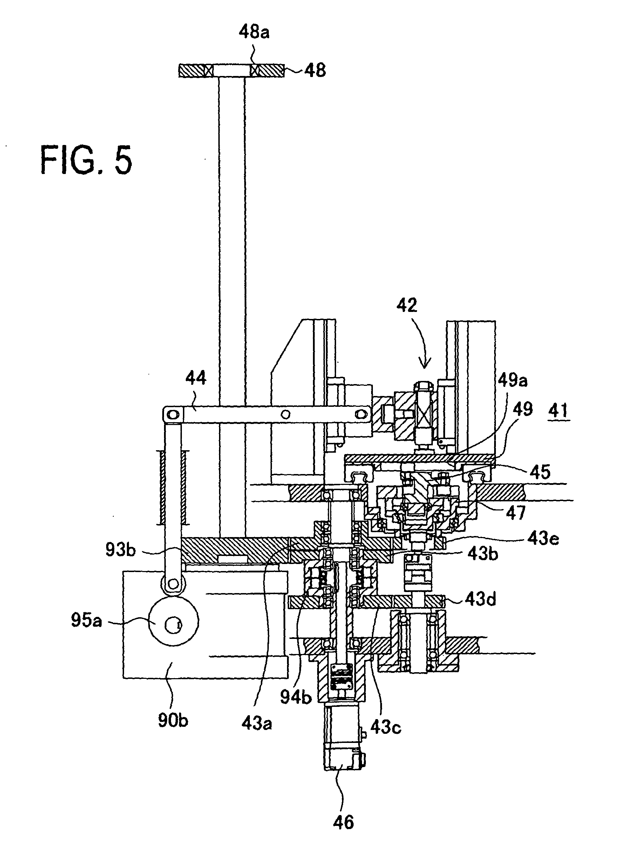

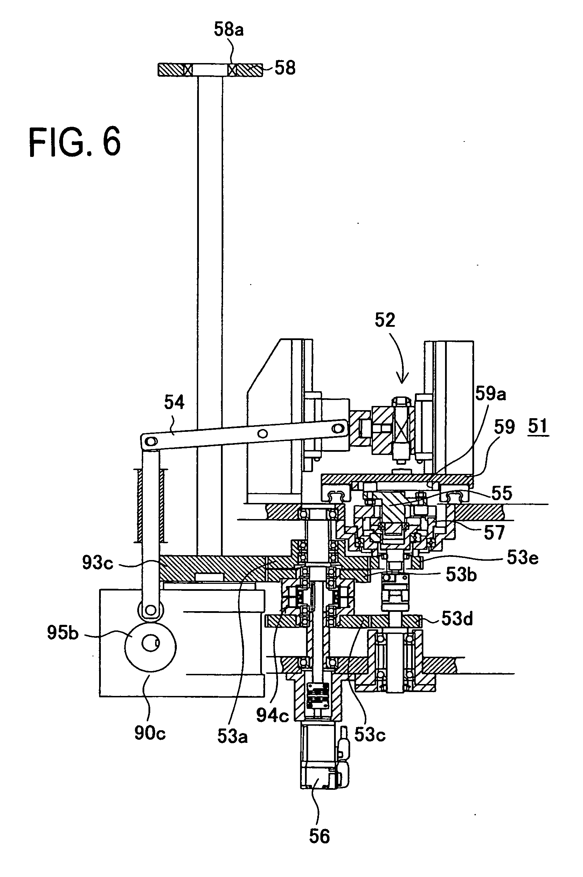

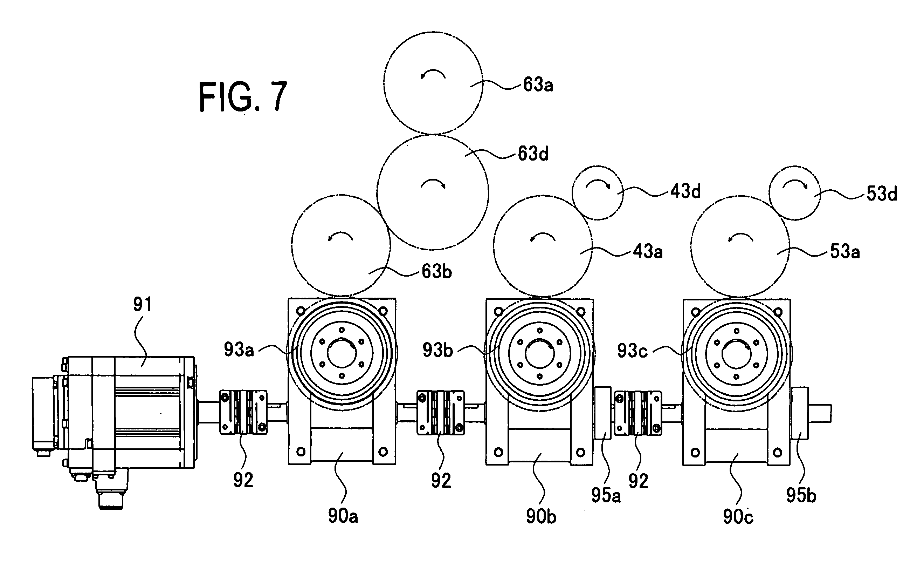

The details of the feed system 40 and the bending system 60 are shown in Figs. 4 to 7. Fig. 4 is a sectional view of the bending system 60. Fig. 5 is a sectional view of a coil-long-side feed slider 41 of the feed system 40. Fig. 6 is a sectional view of a coil-short-side feed slider 51 of the feed system 40. Fig. 7 is a view showing a connected state of the feed system 40 and the bending system 60. The sectional views of Figs. 4 to 6 include parts or portions in the same cross sectional view even though the parts or portions do not actually appear in the same cross section.

The feed system 40 includes the coil-long-side feed slider 41 and the coil-short-side feed slider 51, a clamp mechanism 42 for long-side feed, and a clamp mechanism 52 for short-side feed. The feed sliders 41 and 51 are basically equal in structure to each other excepting that respective clanks are different in length in order to feed the flat wire 15 by different feeding distances.

It is to be noted that the term "long-side feed" represents feeding a wire to form a long side portion of a coil and the term "short-side feed" represents feeding the wire to form a short side portion of the coil.

The clamp mechanism 42 or 52 is arranged to press the flat wire 15 on the feed slider 41 or 51 to clamp the flat wire 15 so that the flat wire 15 is fed by an appropriate distance.

On the other hand, the feed sliders 41 and 51 have to be driven in interlocked relation to the bending system 60 and hence receive power through roller gears 90 (90a to 90c). Specifically, a bending-drive roller gear 90a of driving the bending system 60, a long-side feed roller gear 90b of the coil-long-side feed slider 41, and a short-side feed roller gear 90c of the coil-short-side feed slider 51 are coupled to each other via joints 92 and operated in synchronization with each other.

In the following description, one or all of the roller gears 90a, 90b, and 90c are also referred to as "roller gear(s) 90". The roller gears 90 are operated by power outputted from a power motor 91 connected to the roller gear 90a via the joint 92.

The details of the coil-long-side feed slider 41 shown in Fig. 5 are first explained below. In this slider 41, a correcting gear 43b for long-side feed receives power transmitted from an output gear 93b of the long-side feed roller gear 90b. The power transmitted to the correcting gear 43b attached on top of a long-side feed differential gear 94b using a harmonic drive system is outputted by the differential gear 94b to a second transmission gear 43c attached under the differential gear 94b.

The long-side feed differential gear 94b is attached to a long-side feed correcting motor 46. When this motor 46 is activated, a first transmission gear 43a and the second transmission gear 43c are caused to rotate at different, numbers of rotations from each other.

The second transmission gear 43c is connected to a feed gear 43d which is connected to an eccentric cam 45. Rotation of this cam 45 causes a slide table 49 to slide in a direction perpendicular to the drawing sheet of Fig. 5.

The long-side feed output gear 93b transmits power to the first transmission gear 43a which then transmits the power to a third transmission gear 43e. This power drives an eccentric cam guide 47 connected to the third transmission gear 43e.

The eccentric cam guide 47 guides the eccentric cam 45 to perform fine adjustment of a feed amount of the slide table 49. When the flat wire 15 is to be edgewise bent, a target portion thereof is hard to be edgewise bent due to the property of plastic forming. The mechanism for fine adjustment is therefore provided to enhance accuracy.

The eccentric cam 45 is configured to be moved in a guide groove 49a formed in the slide table 49 when the feed gear 43d is rotated, thereby moving the slide table 49. However, a moving amount of the slide table 49 is determined based on the length of an arm of the eccentric cam 45.

This makes it possible to move the eccentric cam guide 47 to eccentrically place the rotation center of the eccentric cam 45 to thereby adjust the moving amount of slide table 49.

The long-side feed output gear 93b is also connected to a fourth transmission gear 48 internally provided with a first clutch 48a to interrupt transmission of power. The long-side feed roller gear 90b has an input shaft provided with a first cam 95a for moving up and down the long-side feed clamp mechanism 42 through a link 44. When the clamp mechanism 42 is located at a lowermost position, the flat wire 15 is held in a clamped state on the slide table 49. When the clamp mechanism 42 is moved up, the flat wire 15 is released from the clamped state.

The slide table 49 is moved in the direction perpendicular to the drawing sheet of Fig. 5. Accordingly, the flat wire 15 is moved together with the slide table 49 while the clamp mechanism 42 is held down. As a result, the flat wire 15 is unreeled from the bobbin 16 and fed toward the bending system 60.

The details of the coil-short-side feed slider 51 shown in Fig. 6 are explained below. This feed slider 51 is substantially equal in structure to the coil-long-side feed slider 41. In the feed slider 51, a correcting gear 53b receives power transmitted from an output gear 93c of the short-side feed roller gear 90c. The power transmitted to the correcting gear 53b attached on top of a short-side feed differential gear 94c is outputted by the differential gear 94c to a second transmission gear 53c attached under the differential gear 94c.

The short-side feed differential gear 94c is attached to a short-side feed correcting motor 56. When this motor 56 is activated, a first transmission gear 53a and the second transmission gear 53c are caused to rotate at different numbers of rotations from each other.

The second transmission gear 53c is connected to a feed gear 53d which is connected to an eccentric cam 55. Rotation of this cam 55 causes a slide table 59 to slide in a direction perpendicular to the drawing sheet of Fig. 6.

The short-side feed output gear 93c transmits power to the first transmission gear 53a which then transmits the power to a third transmission gear 53e. This power drives an eccentric cam guide 57 connected to the third transmission gear 53e. The eccentric cam guide 57 guides the eccentric cam 55 to perform fine adjustment of a feed amount of the slide table 59.

The eccentric cam 55 is configured to be moved in a guide groove 59a formed in the slide table 59 when the feed gear 53d is rotated, thereby moving the slide table 59. However, a moving amount of the slide table 59 is determined based on the length of an arm of the eccentric cam 55. This makes it possible to move the eccentric cam guide 57 to eccentrically place the rotation center of the eccentric cam 55 to thereby adjust the moving amount of the slide table 59.

The coil 12 is designed so that the short side portions 12a are gradually longer so that the short side portion 12a located closest to an outer periphery of a stator as shown in Fig. 3 is longest. This is because the coil 12 conforms to the configuration of the stator not shown that the outer periphery is longer in circumferential length than the inner periphery. Thus, the feed slider 51 is set to feed the flat wire 15 by a feed distance that becomes gradually longer.

The short-side feed output gear 93c is connected to a fourth transmission gear 58 internally provided with a second clutch 58a to interrupt transmission of power.

The short-side feed roller gear 90c has an input shaft provided with a second cam 95b for moving up and down the short-side feed clamp mechanism 52 through a link 54. When the clamp mechanism 52 is located at a lowermost position, the flat wire 15 is held in a clamped state on the slide table 59. When the clamp mechanism 52 is moved up, the flat wire 15 is released from the clamped state.

The slide table 59 is moved in the direction perpendicular to the drawing sheet of Fig. 6. Accordingly, the flat wire 15 is moved together with the slide table 59 while the clamp mechanism 52 is held down. As a result, the flat wire 15 is unreeled from the bobbin 16 and fed toward the bending system 60.

The first cam 95a and the second cam 95b are placed with different phases. Thus, the feed sliders 41 and 51 will not clamp the flat wire 15 at the same time. Either one of them will act on the flat wire 15.

The details of the bending system 60 are explained below.

In the bending system 60, an output gear 93a transmits power from a roller gear 90a to a correcting gear 63b. This gear 63b is attached on top of a differential gear 94a and transmits the received power to a first transmission gear 63a attached below the differential gear 94a. The differential gear 94a is connected to a correcting motor 70 to correct a bending angle of the flat wire 15.

To edgewise bend the flat wire 15 into the coil 12, each portion to be bent has only to be edgewise bent at 90°. However, the bent portion sometimes may return back to open at an angle wider than the bending angle 90° due to spring back caused by the influence of a material forming the flat wire 15. Thus, the bent portion 12c is made by bending each bending portion by 90° and an additional angle α, thus allowing 90° edgewise bending of the flat wire 15. The power for such correction is given by the correcting motor 70.

Power transmitted to the first transmission gear 63a causes a rotary table 75 to rotate. This rotary table 75 is provided with four bending jigs 77 rotatable together with the rotary table 75.

A motor 61 for lifting is attached with a gear 62 through which power is transmitted to the first transmission gear 63a. The first transmission gear 63a is connected to a cam guide 71. This cam guide 71 includes a first cam groove 71a and a second cam groove 71b. A cam 73 for lifting the bending jigs 77 rolls along the first cam groove 71a and a cam 72 for lifting a holding shaft rolls along the second cam groove 71b.

The cam 72 is operated to move up and down a holding shaft 67. The holding shaft 67 is urged downward by a compression spring 74 and hence is held in a position so that the cam 72 is constantly held down against a lower surface of the second cam groove 71b. Besides a function of holding the flat wire 15 down, the compression spring 74 has another function of preventing a holding shaft flange 67a from pressing the flat wire 15 so excessively as to seize it, or the flat wire 15 from sticking to the flange 67a, into a locked state.

Specifically, the distance between a lower surface of the flange 67a and the rotary table 75 is determined according to a cam curve of the first cam groove 71a. In the case where the flat wire 15 tends to expand or swell, accordingly, the thickness of the flat wire 15 can be determined by the distance between the flange 67a and the rotary table 75 by appropriately holding the flat wire 15 so as not to expand any more.

The distance between the flange 67a of the holding shaft 67 and the rotary table 75 is determined to generate a clearance of several millimeters in addition to the thickness of the flat wire 15 when the shaft 67 is located at an uppermost position. The distance is also determined to be almost equal to the thickness of the flat wire 15 when the shaft 67 is located at a lowermost position. Accordingly, when the cam 72 rolls along the second cam groove 71b, the shaft 67 is moved up and down to the uppermost position to unclamp the flat wire 15 and the lowermost position to clamp the flat wire 15.

The cam 73 is fixed to shafts 76 for lifting the bending jigs 77. When the cam 73 rolls along the first cam groove 71a, the lifting shafts 76 are moved up and down, thereby lifting up and down the bending jigs 77.

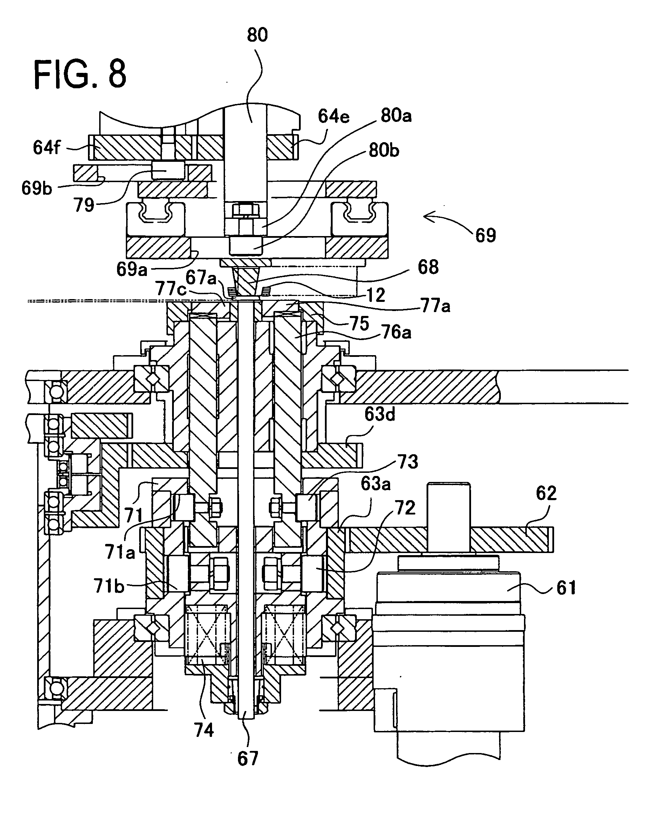

Fig. 8 is a partial enlarged view of the bending system 60 shown in Fig. 5. In Fig. 8, the cam 73 and the cam guide 71 cooperate to hold a first bending jig 77a at an uppermost position. On the other hand, a third bending jig 77c remains at a lowermost position. The bending jigs 77 are arranged as the first bending jig 77a to a fourth bending jig 77d in the rotary table 75. In the following description, one or all of the first to fourth bending jigs 77a to 77d are also referred to as "bending jig(s) 77".

Each bending jig 77 is moved up to protrude from the rotary table 75, thereby guiding the flat wire 15. The lifting shafts 76 are also arranged in four places in correspondence to the bending jigs 77. The lifting shafts 76 are referred to as a first lifting shaft 76a to a fourth lifting shaft 76d in correspondence to the first bending jig 77a to the fourth bending jig 77d respectively. One or all of the first to fourth lifting shafts 76a to 76d are also referred to as "lifting shaft(s) 76".

An anti-vibration jig 68 is configured to rotate while supporting the inner periphery of the coil 12 in the process of being produced by rotation. The anti-vibration jig 68 is attached to a rotary slider mechanism 69. This mechanism 69 is supplied with three powers to carry out complicated movements of the anti-vibration jig 68. One is the power transmitted from the bending-drive roller gear 90a, one is the power transmitted from the long-side feed roller gear 90b, and one is the power transmitted from the short-side feed roller gear 90c. The roller gears 90b and 90c are selectively operated by the first clutch 48a and the second clutch 58a to supply the power from one of the gears 90b and 90c to the rotary slide mechanism 69.

The power from the bending-drive roller gear 90a is transmitted to a first gear 66a for driving the anti-vibration jig (hereinafter, a gear for driving an anti-vibration jig is referred to as an "anti-vibration gear") and then to a second anti-vibration gear 66b. This gear 66b is coupled to a first bending-power transmission gear 64a through a shaft. This gear 64a is therefore rotated together with rotation of the second anti-vibration gear 66b. The power from the first transmission gear 64a is transmitted to a second bending-power transmission gear 64b. This gear 64b is connected to an eccentric-cam holding table 78 and causes the table 78 to rotate. A first eccentric cam 79 attached to the table 78 causes the rotary slide mechanism 69 to rotate.

The power from the long-side feed roller gear 90b is transmitted to a third anti-vibration gear 66c via the long-side feed fourth transmission gear 48. This third gear 66c is connected to a crank shaft 80 and causes a crank arm 80a provided at an end of the crank shaft 80 to rotate. Rotation of the crank arm 80a causes a cam 80b to roll along a cam groove 69a formed in the rotary slide mechanism 69.

The power from the short-side feed output gear 93c is transmitted to a fourth anti-vibration gear 66d via the short-side feed fourth transmission gear 58. This fourth gear 66d is coupled to a short-side feed second power transmission gear 64d through a shaft. This gear 64d transmits the power to a short-side feed first power transmission gear 64c which is connected to a long-side feed first power transmission gear 64e via a hollow shaft 81. This gear 64e transmits the power to a long-side feed second power transmission gear 64f.

The second power transmission gear 64f is provided with a first eccentric cam 79. Rotation of the gear 64f causes the cam 79 to roll along the cam groove 69b. As above, the cam 79, the cam 80b, and the eccentric-cam holding table 78 operate in cooperation with each other to rotate the anti-vibration jig 68 fixed to the rotary slider mechanism 69.

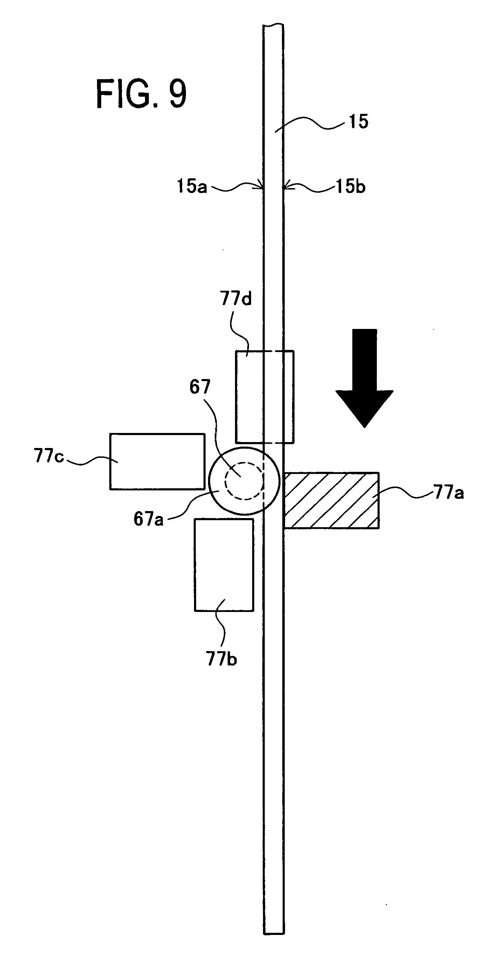

The above configuration in the first embodiment exhibits the following operations. Figs. 9 to 16 schematically show the steps of winding the coil 12. Fig. 9 is a schematic view of a first step for a first turn (layer) of the coil 12 in a winding process. In the figure, the bending jig 77 with hatched lines is in a lifted-up state. The other bending jigs 77 with no hatched lines are in a lifted-down statue.

As the bending jigs 77, the first to fourth bending jigs 77a to 77d are arranged at equal angular intervals around the holding shaft 67. The shaft 67 is located at the uppermost position. The first bending jig 77a is lifted up and hence the flat wire 15 is held between the first bending jig 77a and the shaft 67.

An inner periphery surface 15a of the flat wire 15 which will be located in an inner side of the finished coil 12 is in contact with the shaft 67. An outer periphery surface 15b of the flat wire 15 which will be located in an outer side of the finished coil 12 is in contact with the first bending jig 77a. The flat wire 15 held in such a state is fed by a fixed distance in an arrow direction by being guided between the holding shaft 67 and the first bending jig 77a. Specifically, the flat wire 15 is fed by the distance corresponding to the length of the long side portion 12b by operation of the coil-long-side feed slider 41.

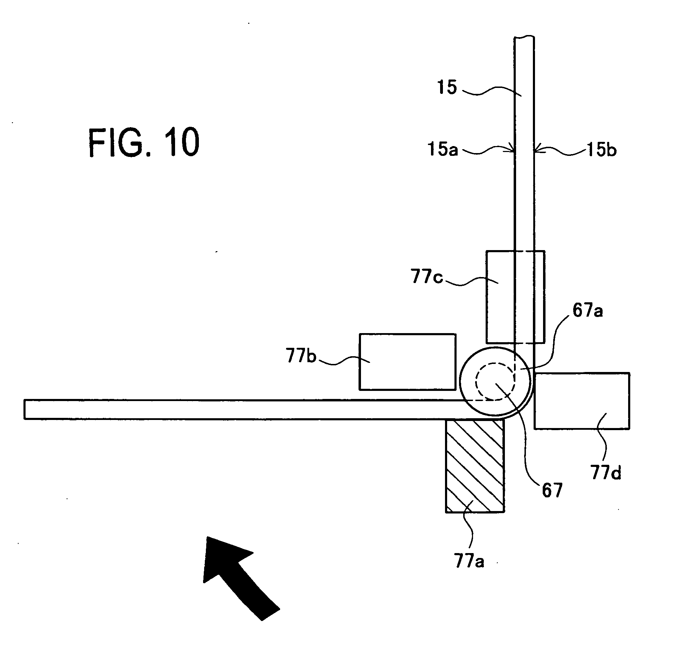

Fig. 10 is a schematic view of a second step for the first turn of the coil 12 in the winding process. After the flat wire 15 is fed by the fixed distance, the holding shaft 67 is moved down to the lowermost position so that the lower surface of the flange 67a comes into contact with the flat wire 15. The rotary table 75 is then rotated to move the bending jigs 77. At that time, the first bending jig 77a remains lifted up and is rotated in contact with the outer periphery surface 15a, thereby bending the flat wire 15 along the holding shaft 67.

Since the holding shaft 67 is located in the lowermost position, the thickness of the flat wire 15 is defined by the distance between the lower surface of the flange 67a and the upper surface of the rotary table 75. This makes it possible to restrain the inner periphery portion of the flat wire 15 from expanding during the edgewise bending.

As above, the first bent portion 12c1 of the coil 12 is formed. After the flat wire 15 is edgewise bent, the first bending jig 77a is lifted down and instead the fourth bending jig 77d is lifted up. Furthermore, the holding shaft 67 is moved to the uppermost position.

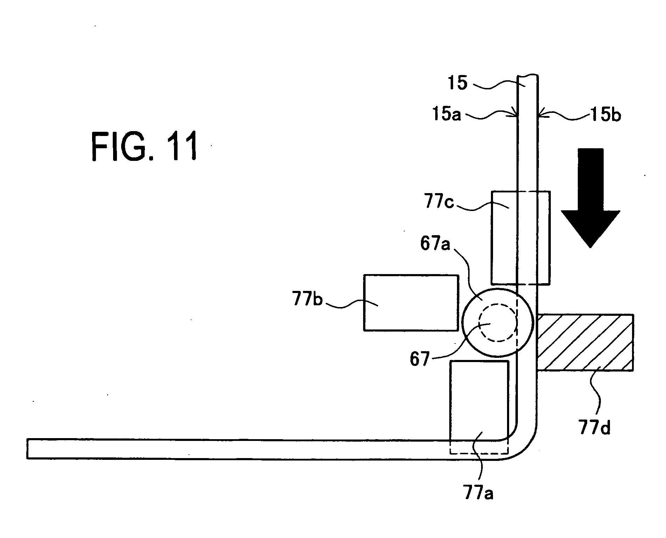

Fig. 11 is a schematic view of a third step for the first turn of the coil 12 in the winding process. After the fourth bending jig 77d is lifted up, the flat wire 15 is fed again by only a distance corresponding to the length of the short side portion 12a by operation of the feed slider 51 while the flat wire 15 is guided between the holding shaft 67 and the fourth bending jig 77d.

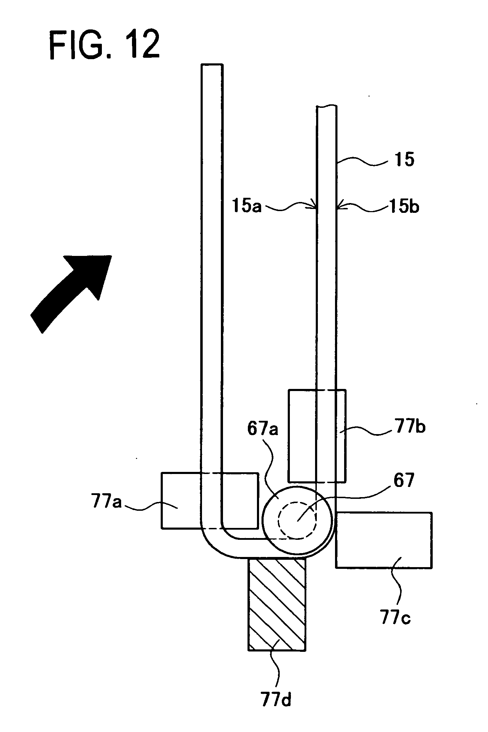

Fig. 12 is a schematic view of a fourth step for the first turn of the coil 12 in the winding process. While the fourth bending jig 77d remains lifted-up, the holding shaft 67 is moved to the lowermost position. The rotary table 75 is then rotated to move the bending jigs 77 around the holding shaft 67. As a result, the fourth bending jig 77d remaining lifted-up is rotated in contact with the outer periphery surface 15b, thereby bending the flat wire 15 along the holding shaft 67. In this way, the second bent portion 12c2 of the coil 12 is formed. After the flat wire 15 is edgewise bent, the fourth bending jig 77d is lifted down and the holding shaft 67 is moved to the uppermost position.

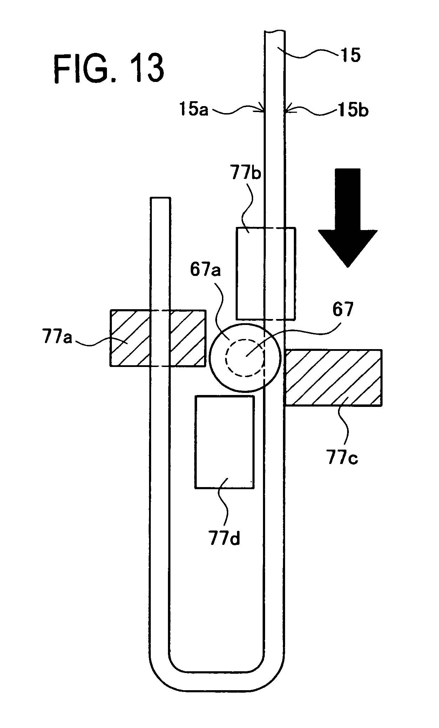

Fig. 13 is a schematic view of a fifth step for the first turn of the coil 12 in the winding process. In sync with lifting-down of the fourth bending jig 77d, the third bending jig 77c is lifted up. The flat wire 15 is then fed by the distance corresponding to the length of the long side portion 12b by the coil-long-side feed slider 41. After feeding of the flat wire 15, the first bending jig 77a is also lifted up.

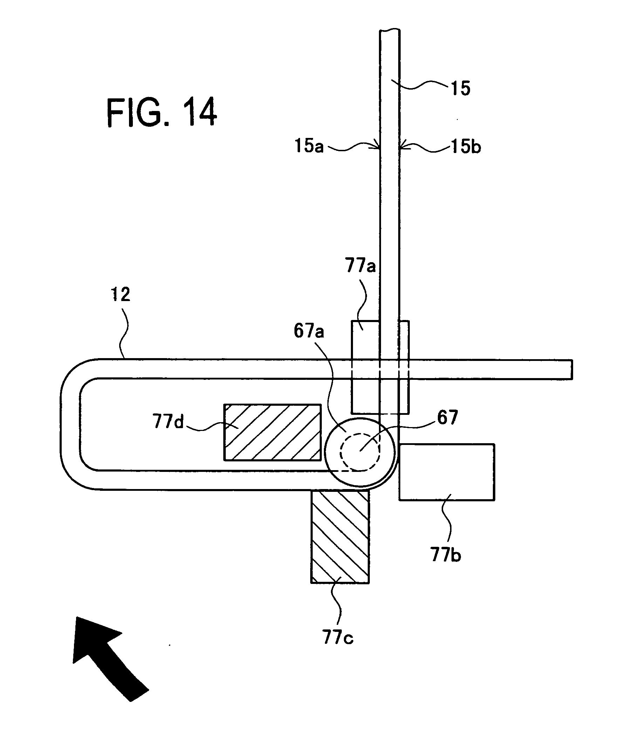

Fig. 14 is a schematic view of a sixth step for the first turn of the coil 12 in the winding process. While the third bending jig 77c is lifted up, the holding shaft 67 is moved to the lowermost position. The rotary table 75 is then rotated to move the bending jigs 77 around the holding shaft 67. As a result, the third bending jig 77c remaining lifted-up is rotated in contact with the outer periphery surface 15b, thereby bending the flat wire 15 along the holding shaft 67.

The third bent portion 12c3 of the coil 12 is formed as above. It is to be noted that the first bending jig 77a is also held in the lifted-up state, a leading end of the flat wire 15 is lifted above a portion of the flat wire 15 in the process of being edgewise bent so that the leading end goes over the portion being edgewise bent to wind the flat wire 15 into a coiled form. After the flat wire 15 is edgewise bent, the third bending jig 77c is lifted down and the holding shaft 67 is moved to the uppermost position.

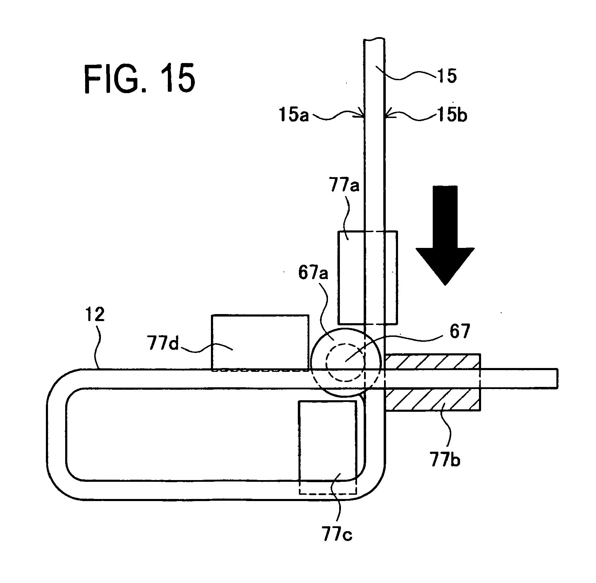

Fig. 15 is a schematic view of a seventh step for the first turn of the coil 12 in the winding process. The third bending jig 77c is lifted down and simultaneously the second bending jig 77b is lifted up. The flat wire 15 is fed by the distance corresponding to the short side portion 12a by the feed slider 51. At that time, the flat wire 15 is guided between the holding shaft 67 and the second bending jig 77b.

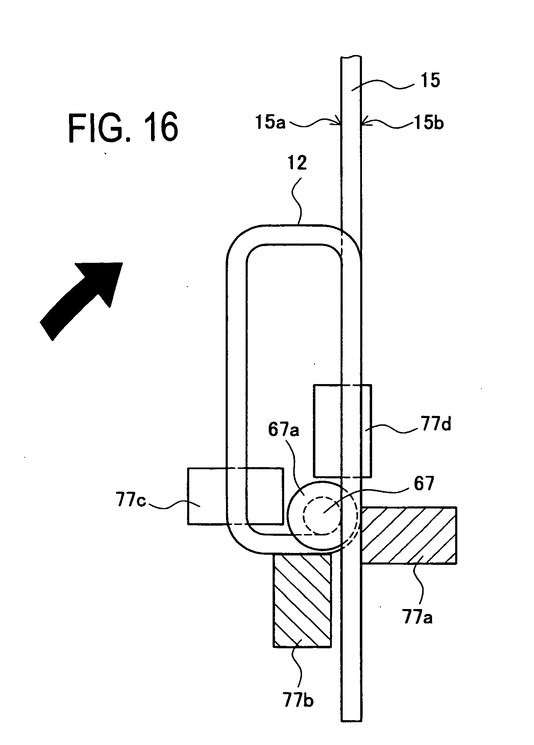

Fig. 16 is a schematic view of an eighth step for the first turn of the coil 12 in the winding process. While the second bending jig 77b is held in the lifted-up state, the holding shaft 67 is moved to the lowermost position. The rotary table 75 is then rotated to move the bending jigs 77 around the holding shaft 67. As a result, the second bending jig 77b remaining lifted-up is rotated in contact with the outer periphery surface 15b, thereby bending the flat wire 15 along the holding shaft 67. The fourth bent portion 12c4 of the coil 12 is thus formed. After the flat wire 15 is edgewise bent, the second bending jig 77b is lifted down and the holding shaft 67 is moved to the uppermost position.

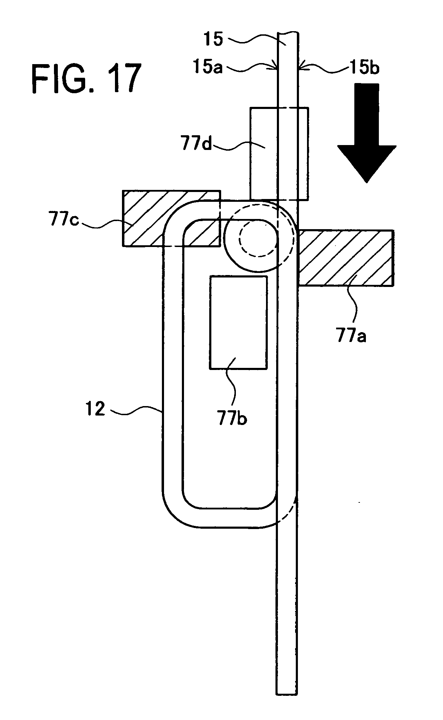

Fig. 17 is a schematic view of a first step for a second turn (layer) of the coil 12 in the winding process. This Fig. 17 corresponds to Fig. 9. Similarly, the flat wire 15 is fed by the coil-long-side feed slider 41. Subsequently, the steps shown in Figs. 10 to 16 are repeated to wind the coil 12.

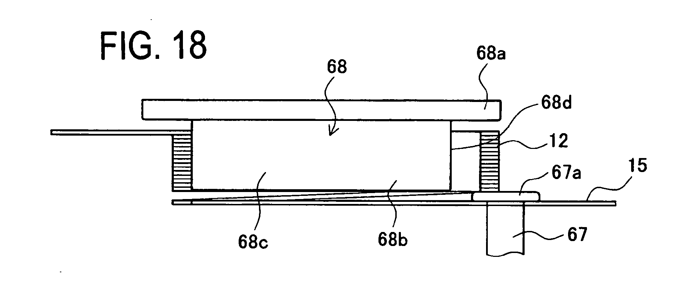

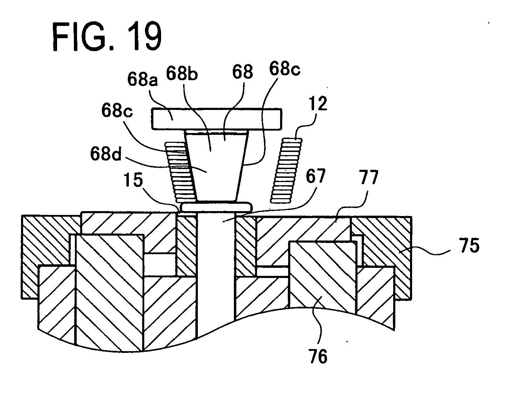

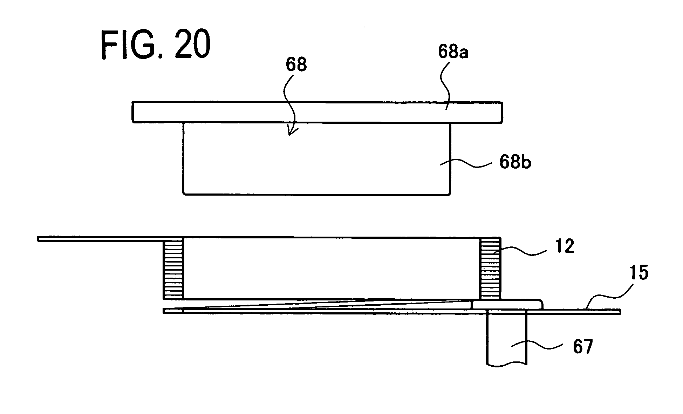

The coil 12 is wound by the edgewise winding apparatus 10 in the above manner. For high-speed winding, the anti-vibration jig 68 has to be used. Fig. 18 is a sectional side view showing a state where the anti-vibration jig 68 is inserted in the coil 12. Fig. 19 is an enlarged sectional view of the rotary table 75 and its surrounding in a state where the anti-vibration jig 68 is inserted in the coil 12. Figs. 18 and 19 are sectional views seen from different directions by an angle of 90°. Fig. 20 is a sectional side view showing a state where the anti-vibration jig 68 is removed from the coil 12.

The anti-vibration jig 68 includes a coil retaining flange 68a and an insert part 68b. This insert part 68b is designed to have a smaller outer shape than the inner periphery of the coil 12. Accordingly, as shown in Figs. 18 and 19, a clearance is produced between the insert part 68b and the coil 12. The long side surfaces 68c of the anti-vibration jig 68 are slanted along the inner periphery of the coil 12. In other words, the short side surfaces 68d of the jig 68 are tapered as shown in Fig. 19.

When the coil 12 is to be wound, the anti-vibration jig 68 is moved down to a position near the holding shaft 67 and then the edgewise bending of the flat wire 15 is started. After completion of winding the coil 12, the anti-vibration jig 68 is moved up by a lifter not shown. The rotary slider mechanism 69 is attached to a linear guide 65a slidable on a linear shaft 65 provided in the bending system 60 (see Fig. 4), thus allowing the anti-vibration jig 68 to move upward together with the rotary slider mechanism 69.

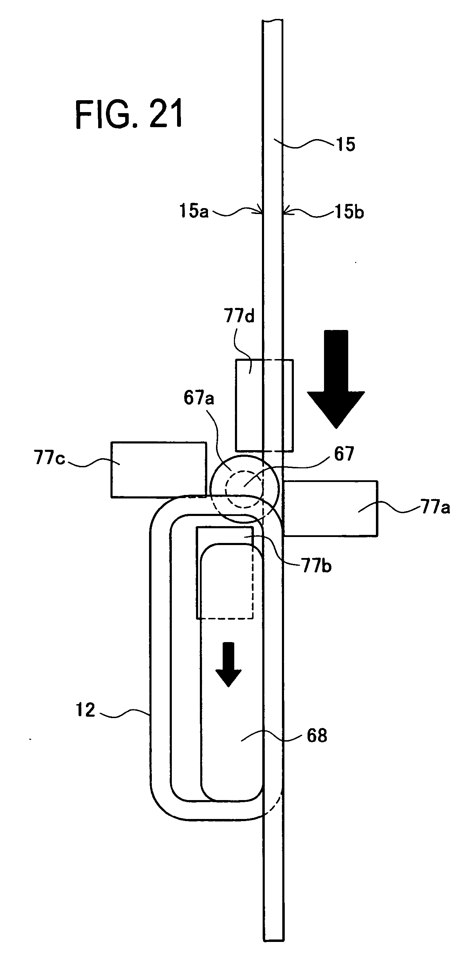

The following explanation is given to the movement of the anti-vibration jig 68. Figs. 21 to 28 are schematic views sequentially showing the movement of the anti-vibration jig 68. Fig. 21 is a schematic view for a first step of the movement of the anti-vibration jig 68. Fig. 21 corresponds to Fig. 9.

The flat wire 15 is fed by the coil-long-side feed slider 41 and simultaneously the anti-vibration jig 68 inserted inside the coil 12 is also moved in the same direction while contacting with the inner periphery of the coil 12. Specifically, the anti-vibration jig 68 is moved while it remains contact with the inner periphery surface 15a of the flat wire 15. The anti-vibration jig 68 is arranged to interlock with the coil-long-side feed slider 41 and thus it is moved in sync therewith.

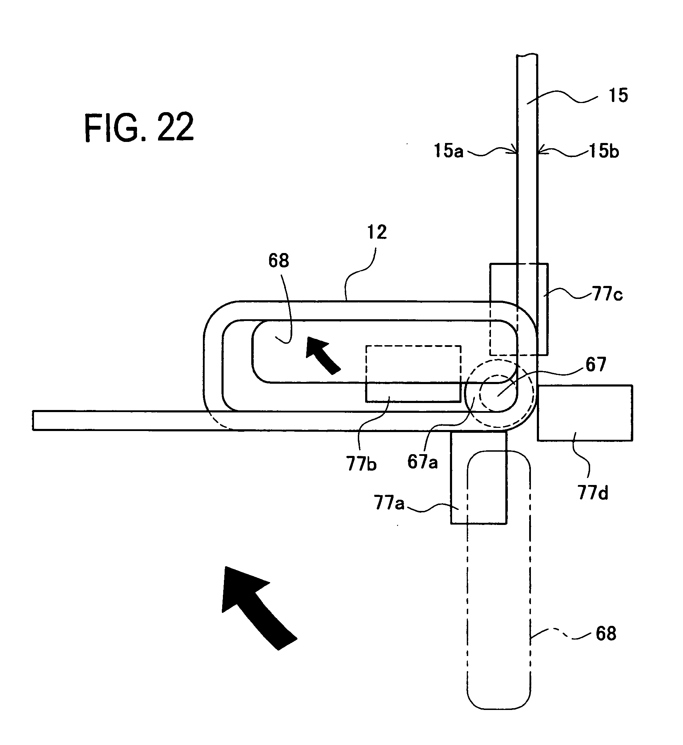

Fig. 22 is a schematic view for a second step of the movement of the anti-vibration jig 68. Fig. 22 corresponds to Fig. 10. In association with the rotation of the bending jigs 77, the anti-vibration jig 68 movable in sync with the rotary table 75 also rotates. At that time, the anti-vibration jig 68 is rotated to move to a relatively diagonally opposite corner in the inner periphery of the coil 12, not around the rotation center of the coil 12, while the anti-vibration jig 68 supports the inner periphery of the coil 12.

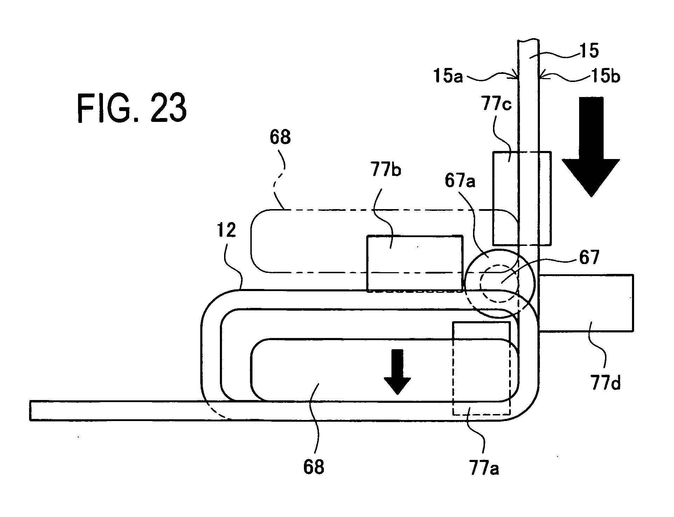

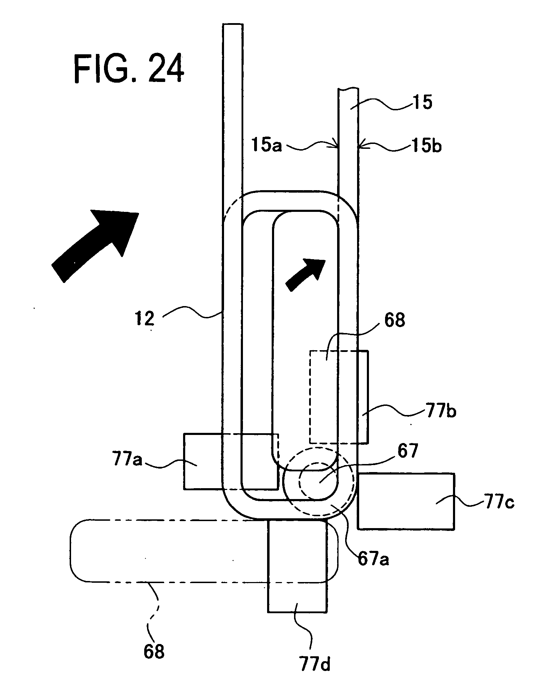

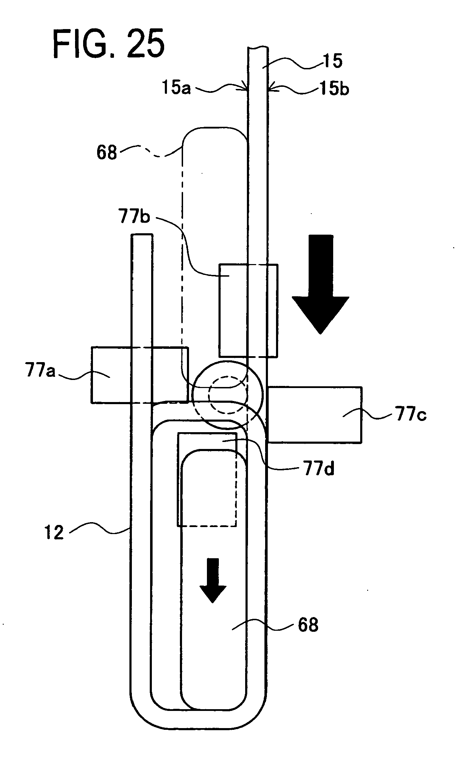

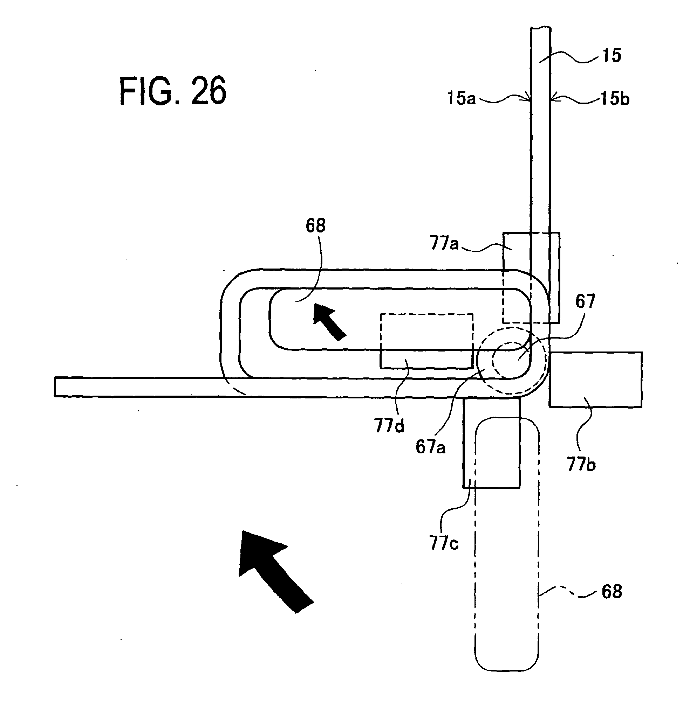

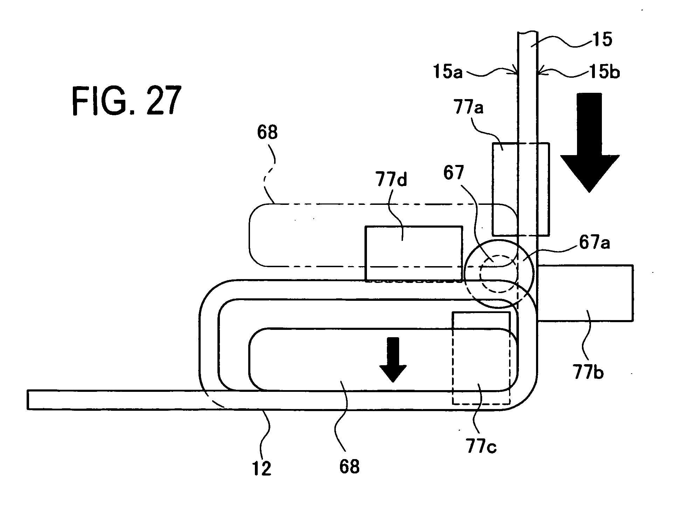

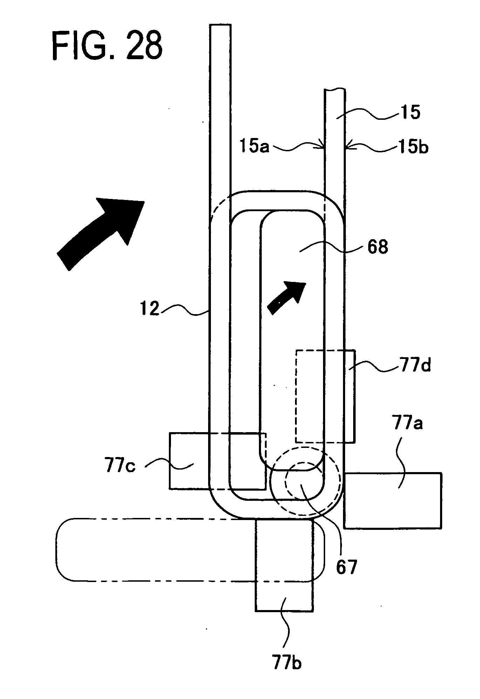

Fig. 23 shows a third step and corresponds to Fig. 11. Fig. 24 shows a fourth step and corresponds to Fig. 12. Fig. 25 shows a fifth step and corresponds to Fig. 13. Fig. 26 shows a sixth step and corresponds to Fig. 14. Fig. 27 shows a seventh step and corresponds to Fig. 15. Fig. 28 shows an eighth step and corresponds to Fig. 16.

As shown in Figs. 21 to 28, the anti-vibration jig 68 is rotated to move to the relatively diagonally opposite position in the inner periphery of the coil 12 while the anti-vibration jig 68 supports the inner periphery of the coil 12. Furthermore, when the flat wire 15 is fed by the coil-long-side feed slider 41 or the coil-short-side feed slider 51, the anti-vibration jig 68 is moved to come into contact with an opposite side in the inner periphery of the coil 12.

Preferably, the size of the insert part 68b with respect to the inner periphery of the coil 12 is appropriately determined according to the follow-up performance of the anti-vibration jig 68. If perfect synchronization is possible, the size of the insert part 68b may be determined to be equal to the inner periphery of the coil 12 without clearance. If the follow-up performance is poor, the size of the insert part 68b needs to be smaller than the inner periphery of the coil 12. This follow-up performance becomes severer as the coil 12 is wound at higher speed. Thus, a slight clearance is preferably provided.

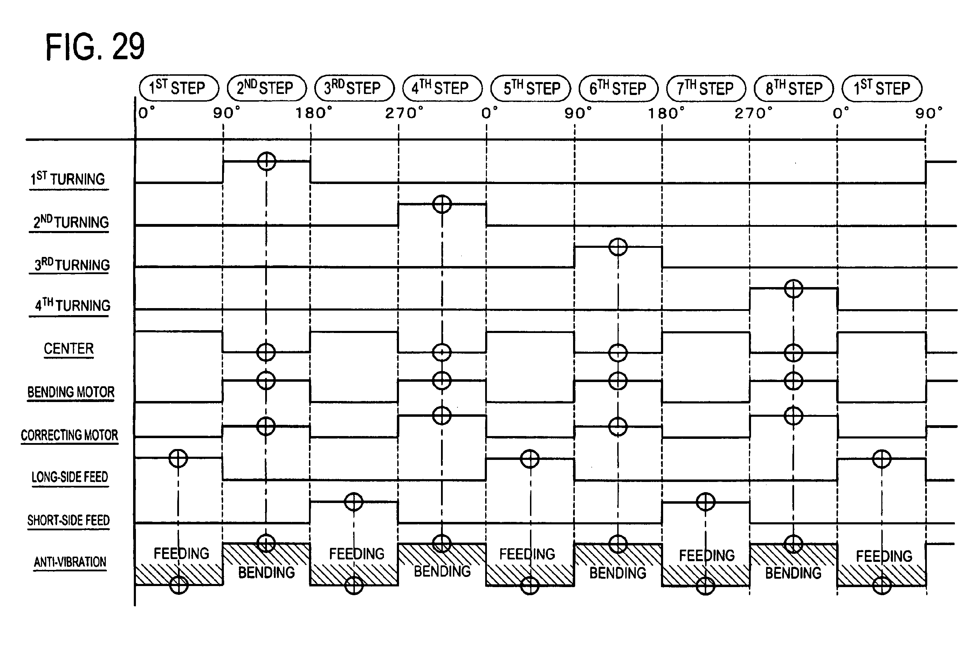

The operations and movements of the coil-long-side feed slider 41, the coil-short-side feed slider 51, the bending system 60, and the anti-vibration jig 68 in the edgewise winding apparatus 10 are explained above. Additionally, entire operations are explained below referring to a timing chart of Fig. 29 comprehensively showing timing of the operations. In this timing chart, "First turning" to "Fourth turning" represent the order of forming the bent portions (corners) of the flat wire 15. One of four corners of the coil 12 is referred to as the "First turning" and others are subsequently referred to as "Second turning" to "Fourth turning".

A term "Center" represents the up and down movement of the holding shaft 67. A term "Bending motor" represents the movement of the output gear 93a which is driven by power outputted from the bending-drive roller gear 90a. A term "Correcting motor" represents activation/deactivation of the correcting motor 70 for correcting the bending angle.

A term "Long-side feed" represents the feed timing of the coil-long-side feed slider 41 and a term "Short-side feed" represents the feed timing of the coil-short-side feed slider 51.

A term "Anti-vibration" represents the movement of the anti-vibration jig 68. The movement of the anti-vibration jig 68 includes two patterns, i.e., feeding and bending. The feeding timing is shown on a lower side and the bending timing is shown on an upper side.

Angles in a lateral axis indicate rotation angles of the power motor 91 which is a main shaft. The first step and subsequent steps will be explained in sequence. In the first step, the flat wire 15 is fed by the predetermined distance by the coil-long-side feed slider 41. The anti-vibration jig 68 receives power transmitted from the long-side feed roller gear 90b and is thus moved by the predetermined distance in sync with the feeding of the flat wire 15.

In the second step, the coil 12 is edgewise bent at the first turning to form the first bent portion 12c1. At that time, the holding shaft 67 is located in the lowermost position to hold the flat wire 15 to prevent the width of the flat wire 15 from increasing.

The power for bending is transmitted from the output gear 93a. Simultaneously, the correcting motor 70 is also activated. Thus, the rotary table 75 is rotated at an angle several degrees larger than 90° and returned to the position of 90°. In this way, the flat wire 15 can reliably be edgewise bent at 90° by absorbing a returning angle resulting from spring back. By the power transmitted from the output gear 93a to the first bending-power transmission gear 64a, the anti-vibration jig 68 is also rotated in sync with the output gear 93a.

In the third step, the flat wire 15 is fed by the predetermined distance by the coil-short-side feed slider 51. The anti-vibration jig 68 is also moved by the predetermined distance in sync with the feeding of the flat wire 15 by the power transmitted from the short-side feed roller gear 90c. During this step, the holding shaft 67 is held in the upper position.

In the fourth step, the coil 12 is edgewise bent at the second turning to form the second bent portion 12c2. At that time, the holding shaft 67 is located in the lowermost position to hold the flat wire 15 to prevent the width of the flat wire 15 from increasing. The power for bending is transmitted from the output gear 93a. Simultaneously, the correcting motor 70 is also activated. Thus, the rotary table 75 is rotated at an angle several degrees larger than 90° and is returned to the position of 90°. In this way, the flat wire 15 can reliably be edgewise bent at 90° by absorbing a returning angle resulting from spring back.

The second turning after the short side feed is close to the edgewise bent portion at the first turning. Accordingly, spring-back of the flat wire 15 tends to be larger. A correcting angle of the rotary table 75 therefore has to be set larger than for the first turning. The anti-vibration jig 68 is also rotated in sync with the output gear 93a by the power transmitted from the output gear 93a to the first bending-power transmission gear 64a.

In the fifth step, the flat wire 15 is fed by the predetermined distance by the coil-long-side feed slider 41. The anti-vibration jig 68 is also moved by the predetermined distance in sync with the feeding of the flat wire 15 by the power transmitted from the long-side feed roller gear 90b. During this step, the holding shaft 67 is located in the upper position.

In the sixth step, the coil 12 is edgewise bent at the third turning to form the third bent portion 12c3. At that time, the holding shaft 67 is located in the lowermost position to prevent the width of the flat wire 15 from increasing. The power for bending is transmitted from the output gear 93a. Simultaneously, the correcting motor 70 is also activated. Thus, the rotary table 75 is rotated at an angle several degrees larger than 90° and returned to the position of 90°. In this way, the flat wire 15 can reliably be edgewise bent at 90° by absorbing a returning angle resulting from spring back. The correcting angle in this state may be equal to that in the second step. The anti-vibration jig 68 is also rotated in sync with the output gear 93a by the power transmitted from the output gear 93a to the first bending-power transmission gear 64a.

In the seventh step, the flat wire 15 is fed by the predetermined distance by the coil-short-side feed slider 51. The anti-vibration jig 68 is also moved by the predetermined distance in sync with the feeding of the flat wire 15 by the power transmitted from the short-side feed roller gear 90c. During this step, the holding shaft 67 is located in the upper position.

In the eighth step, the coil 12 is edgewise bent at the fourth turning to form the fourth bent portion 12c4. At that time, the holding shaft 67 is located in the lowermost position to prevent the width of the flat wire 15 from increasing. The power for bending is transmitted from the output gear 93a. Simultaneously, the correcting motor 70 is also activated. Thus, the rotary table 75 is rotated at an angle several degrees larger than 90° and returned to the position of 90°. In this way, the flat wire 15 can reliably be edgewise bent at 90° by absorbing a returning angle resulting from spring back. The fourth turning after the short side feed is close to the edgewise bent portion at the third turning. Accordingly, spring-back of the flat wire 15 tends to be larger. The correcting angle of the rotary table 75 therefore has to be set larger than for the third turning. By the power transmitted from the output gear 93a to the first bending-power transmission gear 64a, the anti-vibration jig 68 is also rotated in sync with the output gear 93a.

The first embodiment providing the above configuration and operations exhibits the following advantages.

Firstly, the coil 12 can be wound at high speed.

The edgewise winding apparatus 10 is arranged to produce the coil 12 made by winding the flat wire 15 into a non-circular form by edgewise bending so that the coil 12 includes a plurality of bent portions 12c with equal bending angles, the short side portions 12a and the long side portions 12b each existing between the bent portions 12c. The apparatus 10 includes the holding shaft 67 which will contact with the inner periphery surface 15a of the flat wire 15 which will form the inner periphery of the finished coil 12 and clamps the bent portion 12c of the flat wire 15 in the thickness direction of the flat wire 15, and the rotary table 75. The apparatus 10 further includes the bending jigs 77 which will contact with the outer periphery surface 15b of the flat wire 15 which will form the outer periphery of the finished coil 12. The bending jigs 77 are rotated around the holding shaft 67 while pressing the flat wire 15 in cooperation with the holding shaft 67 and rotary table 75, thereby bending the flat wire 15 to form the bent portion 12c. The bending jigs 77 are configured to move forward and backward in a lamination direction of the flat wire 15, i.e. to protrude from and retract in the rotary table 75. The bending jigs 77, which are equal in number to the number of bent portions 12c or unbent portions per one turn (layer) of the coil 12, are arranged to move around the holding shaft 67 while keeping equal angular intervals from each other.

The edgewise bending of the flat wire 15 is performed by use of the holding shaft 67, the rotary table 75, and the bending jigs 77. Furthermore, the bending jigs 77 are arranged at plural places on the rotary table 75 to move forward and backward (protrude and retract) in the lamination direction of the flat wire 15. Accordingly, the above configuration does not need the returning step of the pressing means disclosed in JP2006-288025A, that is, the returning step of the bending jigs 77. It is therefore possible to shorten the time required for winding the coil 12.

The bending jigs 77 are provided around the outer circumference of the holding shaft 67 and can be moved around the holding shaft 67 while keeping the equal angular intervals from each other. Thus, the flat wire 15 is edgewise bent by the first bending jig 77a lifted at the uppermost position and then the first bending jig 77a is lifted down to the lowermost position. The flat wire 15 is fed by the predetermined distance and the fourth bending jig 77d is lifted up to the uppermost position for performing the edgewise bending. Specifically, the bending jigs 77 are rotated always in one way together with the rotary table 75 and lifted up and down in preparation for the edgewise bending. Thus, the time needed for edgewise bending can be reduced by the returning time.

In the method disclosed in JP2006-288025A, the pressing means corresponding to the bending jigs 77 must be returned by the same distance as the bending angle. This method takes simply two times longer for edgewise bending than the above embodiment. In this embodiment, four bending jigs 77 are arranged on the rotary table 75 at equal angular intervals about the holding shaft 67. It is therefore possible to minimize the time loss and achieve high speed bending.

Furthermore, the holding shaft 67 and the bending jigs 77 are cooperated to edgewise bend the flat wire 15 as above. The coil 12 having a large difference between each short side portion 12a and each long side portion 12b can also be produced. In other words, an elongated coil having a large difference between each short side portion 12a and each long side portion 12b can be wound at high speed, leading to cost reduction.

For one stator, several tens of the coils 12 are needed. Accordingly, cost reduction for each coil can contribute to entire cost reduction of the stator. Shortening a lead time can also reduce the number of edgewise winding apparatuses 10. This contributes to reduction in initial cost and running cost.

In the case where the flat wire 15 is wound at high speed, the coil 12 in the process of being produced may be deformed in shape due to its own weight. However, the anti-vibration jig 68 is provided in contact with part of the inner periphery surface 15a of the flat wire 15. The anti-vibration jig 68 is rotated in association with winding of the flat wire 15 to prevent deformation of the coil 12. With the use of the anti-vibration jig 68, accordingly, the coil 12 can be produced without becoming deformed in shape even at such a speed as to likely cause deformation of the coil 12 in the process of being wound.

One reason for disturbing the high-speed winding is that there is a winding speed region in which the flat wire 15 cannot restrain, by only hardness thereof, the force resulting from the inertia of the coil 12 if the winding speed is increased. As shown in JP2002-184639A, such problem can be avoided by winding the coil 12 on the winding core. However, the problem indicated in the above related art section may occur that a large ratio in length between the short side portion 12a and the long side portion 12b will cause a difference in speed in winding, thereby increasing inertia vibration of the flat wire 15. In consideration of output power and smoothness of the motor using the stator, it is more advantageous to determine the ratio in length between the short side portion 12a and the long side portion 12b so that the short side portion 12 is as short as possible to increase the number of coils 12 to be mounted in the stator.

The edgewise winding apparatus 10 in the first embodiment can achieve high-speed winding of the coil 12 to meet a demand for such motor. Moreover, for production of a coil 12 having a gradually decreasing winding diameter, the anti-vibration jig 68 including slant surfaces 68c corresponding to the slant side surfaces of the coil 12 is inserted and rotated while sliding back and forth in the rotating direction in sync with rotation of the coil 12. Thus, the coil 12 having a trapezoidal cross section can be wound without deforming the shape thereof.

Furthermore, the differential gear 94a and the correcting motor 70 are provided for correcting the rotation angle of the rotary table 75 and the bending jigs 77. During edgewise bending of the flat wire 15, the differential gear 94a and the correcting motor 70 correct the rotation angle of the rotary table 75 and the bending jigs 77. For instance, in the case of edgewise bending a wire by 90°, the bending jigs are rotated by an angle of 90°+α. Accordingly, it is possible to absorb spring-back of the flat wire 15 which occurs due to the material property such as spring characteristics of the flat wire 15. The flat wire 15 can thus be edgewise bent at a desired angle accurately.

### <Second Embodiment>

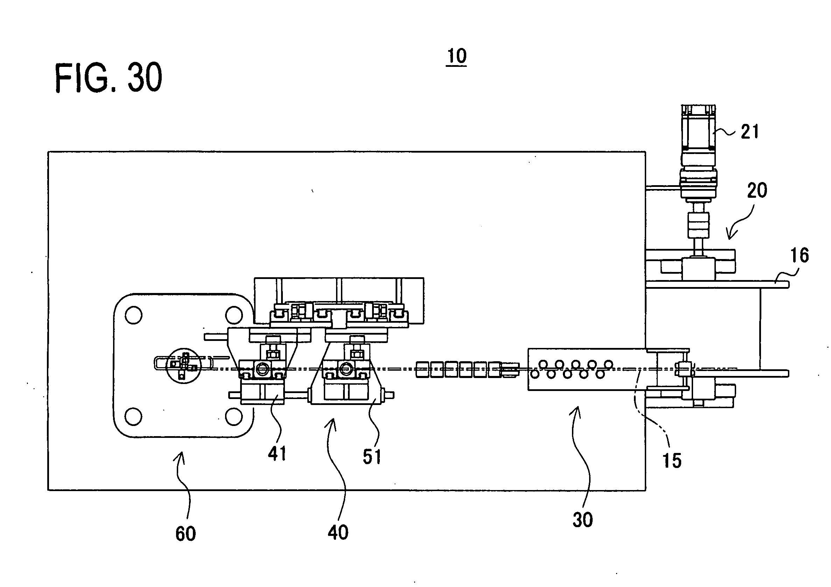

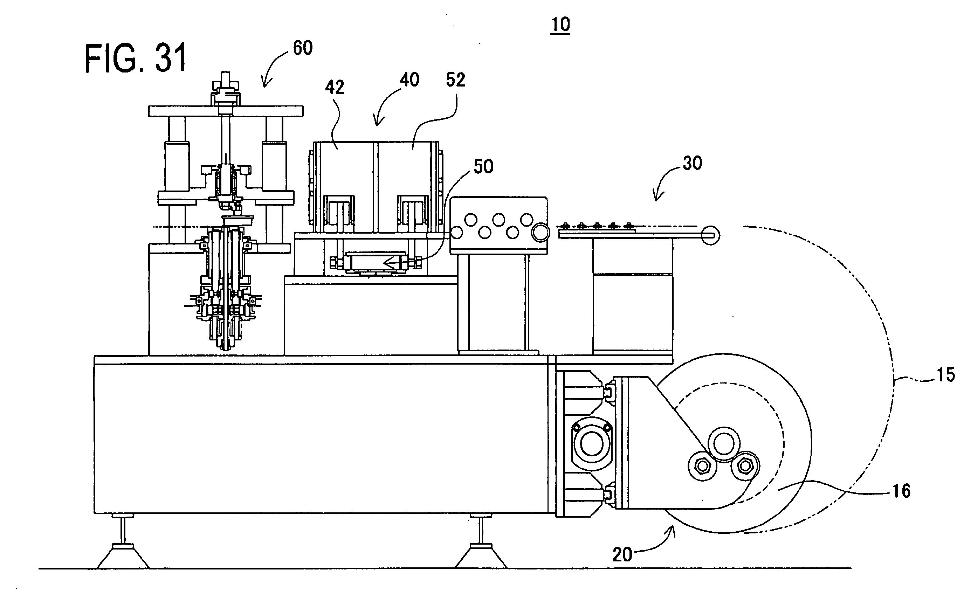

A second embodiment enables the same operation as in the first embodiment excepting a power transmission manner. The following explanation is given to different configurations from the first embodiment. Parts or components given the same reference signs as those in the first embodiment have the same functions as in the first embodiment. Fig. 30 is a plan view of an edgewise winding apparatus 10 in the second embodiment. Fig. 30 corresponds to Fig. 1. Fig. 31 is a side view of the apparatus 10 and corresponds to Fig. 2.

The second embodiment greatly differs from the first embodiment in the power transmission manner. In the first embodiment, the power transmission is carried out through the roller gears 90. On the other hand, in the second embodiment, power transmission is performed through a Geneva mechanism to cause intermittent operation. Thus, the uncoiler 20 and the straightening system 30 are substantially identical to those in the first embodiment.

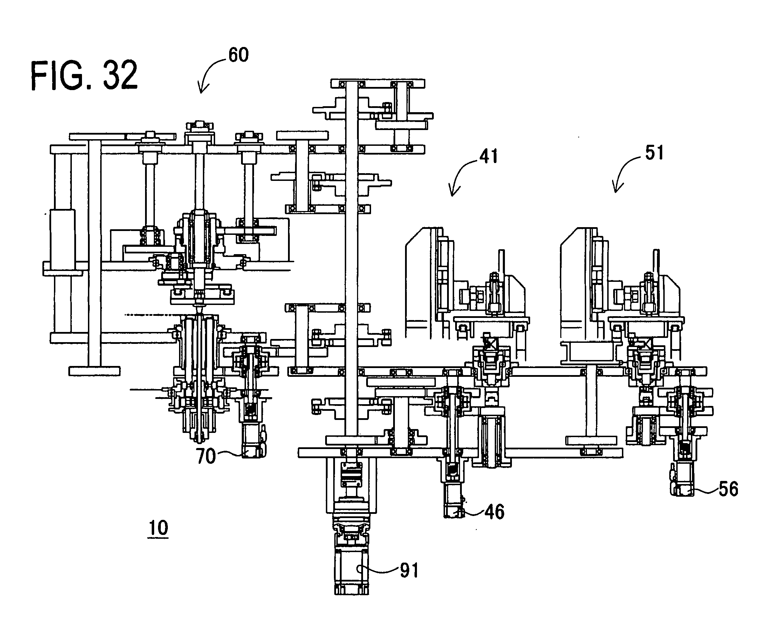

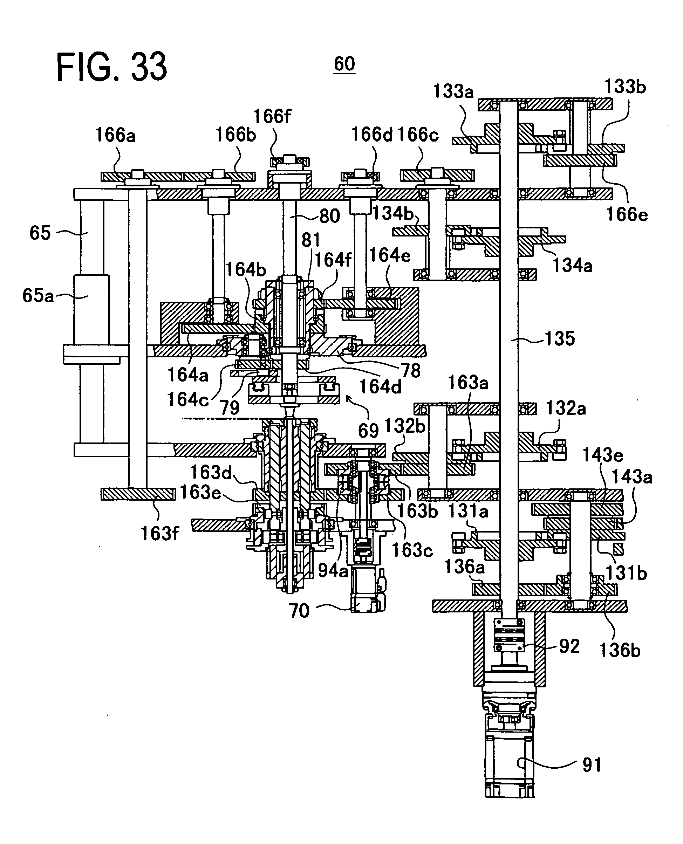

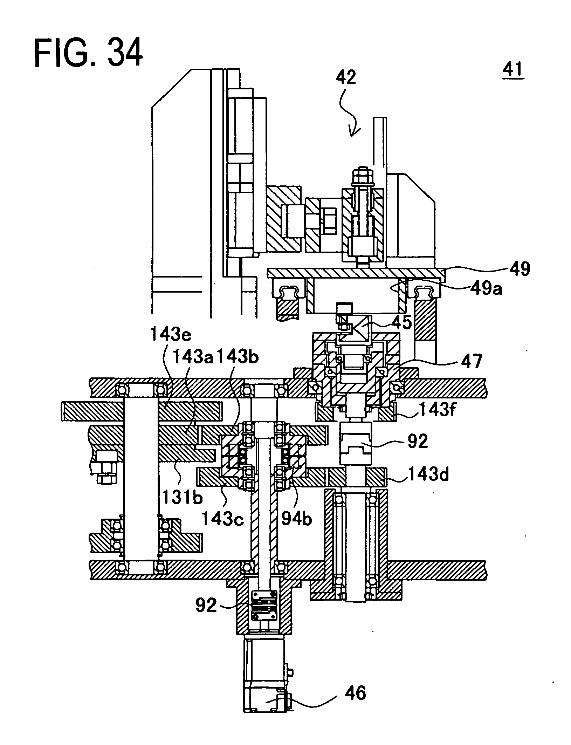

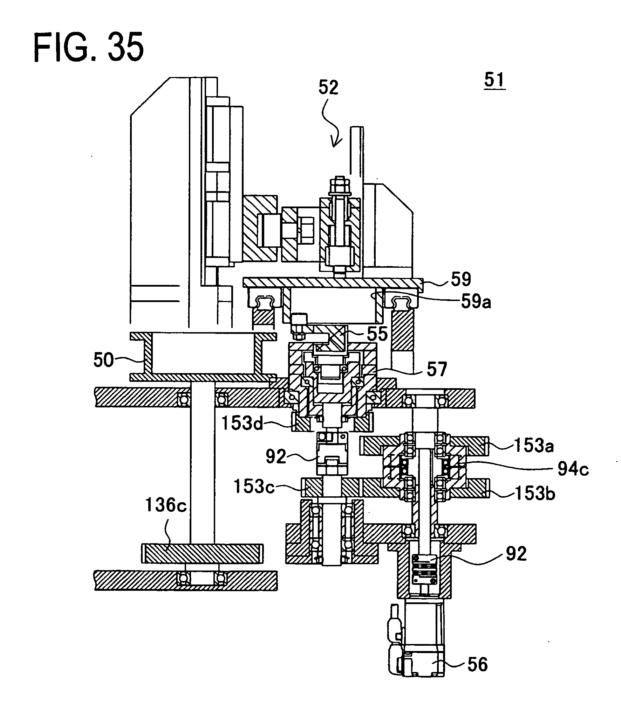

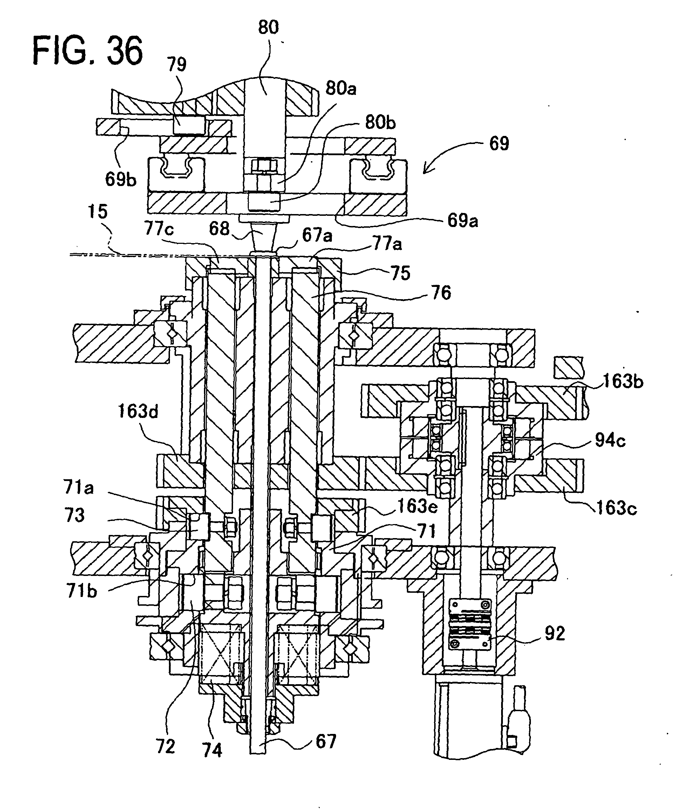

Fig. 32 is a view showing power transmission in the edgewise winding apparatus 10, in which hatching lines are omitted. Fig. 33 is an enlarged view of the bending system 60. Fig. 34 is an enlarged view of the coil-long-side feed slider 41 of the feed system 40. Fig. 35 is an enlarged view of the coil-short-side feed slider 51 of the feed system 40. Fig. 36 is a partial enlarged view of the bending system 60 of Fig. 33 to show the details thereof.

The configuration of the coil-long-side feed slider 41 of Fig. 34 is first explained below. This slider 41 is driven by the power generated by the power motor 91. A power shaft 135 connected to an output side of the power motor 91 of Fig. 33. On this shaft 135, there are fitted on a feed drive pin wheel 131a, a coil-bending pin wheel 132a, a pin wheel 133a for long-side feed of the anti-vibration jig, and a pin wheel 134a for short-side feed of the anti-vibration jig. These wheels transmit power to respective Geneva mechanisms.

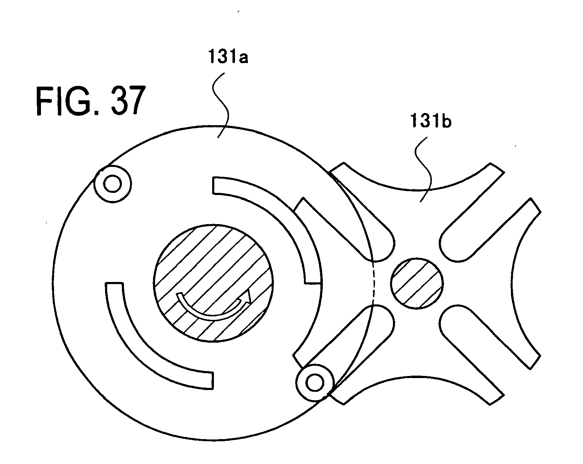

Fig. 37 is a plan view of the feed drive pin wheel 131a and a feed drive Geneva wheel 131b. The pin wheel 131a transmits power to the Geneva wheel 131b connected to a first transmission gear 143a for long-side feed. This gear 143a meshes with a second transmission gear 143b.

The second transmission gear 143b is attached on top of a differential gear 94b and transmits power to a third transmission gear 143c which is attached under the differential gear 94b. The differential gear 94b is connected to the correcting motor 46 to fine adjust a rotation difference between the third and second transmission gears 143c and 143b. The power transmitted from the third transmission gear 143c to a fourth transmission gear 143d is transmitted to the eccentric cam guide 47 via the joint 92.

A fifth transmission gear 143e which operates in sync with the first transmission gear 143a transmits the power to a sixth transmission gear 143f. The sixth transmission gear 143f is attached to the eccentric cam guide 47 to fine adjust the eccentric cam 45. The long-side feed slide table 49 is formed with the guide groove 49a in which the eccentric cam 45 is movable to cause the slide table 49 to slide back and forth to feed the flat wire 15. The clamp mechanism 42 for long-side feed is interlocked with a feed switching cam mechanism 50 shown in Fig. 35. By this mechanism 50, it is determined whether or not the flat wire 15 is clamped on the slide table 49.

If the coil-long-side feed slider 41 is selected by the feed switching cam mechanism 50 to feed the flat wire 15, the slide table 49 is slid in a direction perpendicular to the drawing sheet of Fig. 34. While the long-side feed clamp mechanism 42 is held down, accordingly, the flat wire 15 is moved together with the slide table 49. The flat wire 15 is thus unreeled from the bobbin 16 and fed toward the bending system 60.

The configuration of the coil-short-side feed slider 51 of Fig. 35 is explained below. The power from the power motor 91 of Fig. 33 is transmitted to the fifth transmission gear 143e via the pin wheel 131a and then to a first transmission gear 153a for short-side feed in the slider 51.

The first transmission gear 153a is attached on top of the short-side feed differential gear 94c and transmits the power to a second transmission gear 153b attached under the differential gear 94c. This differential gear 94c is connected to the correcting motor 56 to fine adjust a rotation difference between a third transmission gear 153c and the second transmission gear 153b.

The second transmission gear 153b meshes with the third transmission gear 153c to transmit power to the eccentric cam 55 via the joint 92. The eccentric cam 55 is restricted in movement by the eccentric cam guide 57. This guide 57 is connected to a fourth transmission gear 153d to which the power is transmitted from the long-side feed fifth transmission gear 143e.

The eccentric cam 55 slides along the guide groove 59a formed in the short-side feed slide table 59 to slide the table 59 in a direction perpendicular to the drawing sheet of Fig. 35. The short-side feed clamp mechanism 52 comes near the slide table 59 to clamp the flat wire 15.

The central axis of the eccentric cam guide 57 is out of alignment with the central axis of a shaft of the eccentric cam 55. Accordingly, rotation of the eccentric cam guide 57 enables adjustment of stroke of the eccentric cam 55. In other words, the stroke of the slide table 59 can be adjusted. The coil 12 has a trapezoidal cross section as shown in Fig. 3 according to the shape of a stator in which the coil 12 is to be mounted. Specifically, the length of each short side portion 12a is gradually longer so that the short side portion 12a located closest to an outer periphery of the stator is longest. This stroke adjustment is achieved by the eccentric cam guide 57 and the eccentric cam 55.

The short-side feed clamp mechanism 52 is interlocked with the feed switching cam mechanism 50. By this mechanism 50, it is determined whether or not the flat wire 15 is clamped on the slide table 59. If the coil-short-side feed slider 51 is selected to feed the flat wire 15 by the feed switching cam mechanism 50, the short-side feed slide table 59 is slid in a direction perpendicular to the drawing sheet of Fig. 35. While the short-side feed clamp mechanism 52 is held down, accordingly, the flat wire 15 is moved together with the slide table 59. The flat wire 15 is thus unreeled from the bobbin 16 and fed toward the bending system 60.

The feed switching cam mechanism 50 receives power of the power motor 91 via a first timing gear 136a provided on the output side of the power motor 91, a second timing gear 136b, and a third timing gear 136c meshing with the second timing gear 136b.

The first timing gear 136a is constantly rotated. Accordingly, the feed switching cam mechanism 50 is also constantly rotated, so that either the coil-long-side feed slider 41 or the coil-short-side feed slider 51 is selected by a cam groove formed in the cam mechanism 50. The power is transmitted to the feed sliders 41 and 51 by intermittent operation of the pin wheel 131a and the Geneva wheel 131b. Thus, the feed system 40 and the bending system 60 can be operated alternately.

The configuration of the bending system 60 shown in Figs. 33 and 36 is explained below. Fig. 37 is a plan view of the coil-bending pin wheel 131a and the coil-bending Geneva wheel 131b. The bending system 60 intermittently receives the power transmitted from the power motor 91 via the pin wheel 131a and the Geneva wheel 131b.

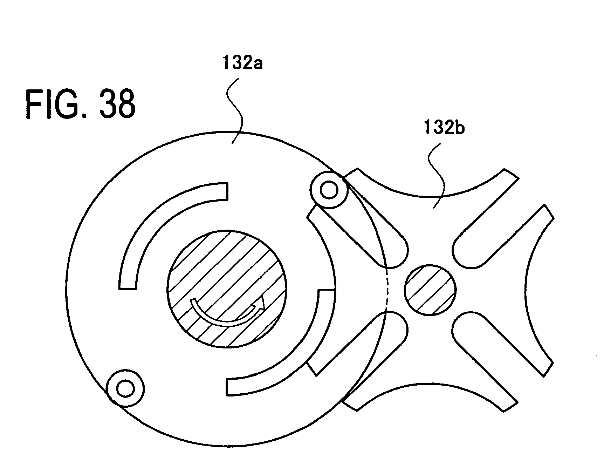

Fig. 38 is a plan view of the coil-bending pin wheel 132a and the coil-bending Geneva wheel 132b. The power transmitted from the pin wheel 132a to the Geneva wheel 132b is transmitted to a first transmission gear 163a for bending system, connected to the Geneva wheel 132b. The first transmission gear 163a meshes with a second transmission gear 163b attached to the differential gear 94a.

The second transmission gear 163b attached on top of the differential gear 94a transmits the power, via the differential gear 94a, to a third transmission gear 163c attached under the differential gear 94a.

The differential gear 94a is connected to the correcting motor 70 to fine adjust a rotation difference between the second transmission gear 163b and the third transmission gear 163c. The flat wire 15 has only to be edgewise bent at an angle of 90°, but it tends to cause spring-back due to its material property. Accordingly, the flat wire 15 is bent by 90° and an additional angle α to form the bent portion 12c. The flat wire 15 can therefore be edgewise bent at 90°.

The third transmission gear 163c transmits the power to a fourth transmission gear 163d. The power transmitted to the fourth transmission gear 163d causes the rotary table 75 to rotate. The rotary table 75 is provided with the four bending jigs 77. These jigs 77 are also rotated together with the rotary table 75.

A fifth transmission gear 163e receives the power transmitted from the long-side feed fifth transmission gear 143e. This gear 143e is synchronized with the feed drive Geneva wheel 131b and hence the fifth transmission gear 163e is also synchronized with the Geneva wheel 131b. In other words, the gear 163e is synchronized with the coil-long-side feed slider 41 or the coil-short-side feed slider 51.

When rotated by the fifth transmission gear 163e, the cam guide 71 causes the bending jigs lifting cam 73 to slide along the first cam groove 71a and the holding shaft lifting cam 72 to slide along the second cam groove 71b. The cam 73 is connected to the bending jigs lifting shaft 76 to lift up/down the bending jigs 77. The cam 72 moves up/down the holding shaft 67. This holding shaft 67 is urged downward by the compression spring 74 and therefore held in a position so that the cam 72 is pressed against the lower side of the second cam groove 71b.

Besides a function of holding the flat wire 15 down, the compression spring 74 has another function of preventing a holding shaft flange 67a from pressing the flat wire 15 so excessively as to seize it, or the flat wire 15 from sticking to the flange 67a, into a locked state. Specifically, the distance between the lower surface of the flange 67a and the rotary table 75 is determined according to a cam curve of the first cam groove 71a. In the case where the flat wire 15 tends to expand or swell, accordingly, the thickness of the flat wire 15 can be determined by the distance between the flange 67a and the rotary table 75 by appropriately holding the flat wire 15 so as not to expand any more.

The bending-jig lifting cam 73 is attached to the lifting shaft 76. When the cam 73 rolls along the first cam groove 71a, therefore, the lifting shaft 76 is moved up and down, thereby lifting the bending jigs 77 up and down. The flat wire 15 is edgewise bent by the cooperation of the bending jigs 77 and the holding shaft 67 in the same manner as in the first embodiment. The anti-vibration jig 68 is a jig that is rotated while supporting the inner periphery of the coil 12 in association with rotation of the coil 12. The anti-vibration jig 68 is attached to the rotary slider mechanism 69.

The rotary slider mechanism 69 is supplied with three powers in order to carry out complicated movements of the anti-vibration jig 68. One is the power transmitted from the pin wheel 131a for feed drive, one is the power transmitted from a pin wheel 133a for long-side feed of anti-vibration jig, and one is the power transmitted from a pin wheel 134a for short-side feed of anti-vibration jig.

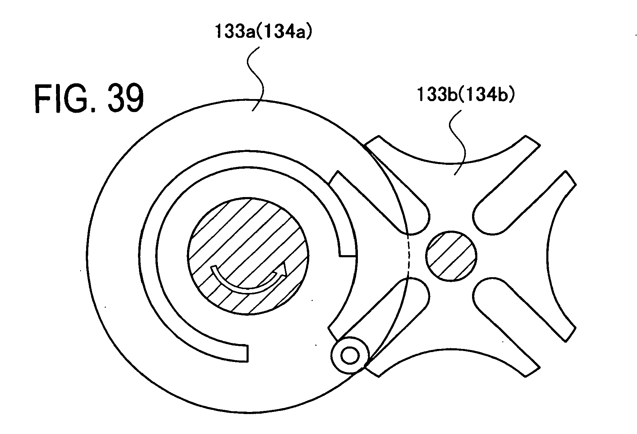

Fig. 39 is a plan view of the pin wheel 133a and a Geneva wheel 133b for long-side feed of anti-vibration jig or the pin wheel 134a and a Geneva wheel 134b for short-side feed of anti-vibration jig. The pin wheel 133a and the Geneva wheel 133b are basically identical in structure to the pin wheel 134a and the Geneva wheel 134b respectively excepting mounting locations.

The power transmitted from the feed drive pin wheel 131a is transmitted to a sixth transmission gear 163f via the long-side feed fifth transmission gear 143e. The power is then transmitted from the sixth transmission gear 163f to a first gear 166a for driving the anti-vibration jig (hereinafter, "anti-vibration gear").

The first anti-vibration gear 166a transmits the power to a second anti-vibration gear 166b and then to a first transmission gear 164a for power transmission to the anti-vibration jig, connected to the second anti-vibration gear 166b. When the power is transmitted from the first transmission gear 164a to a second transmission gear 164b for power transmission to the anti-vibration jig, the power is transmitted to an eccentric cam holding table 78 connected to the second transmission gear 164b.

A third transmission gear 164c for power transmission to the anti-vibration jig is eccentrically attached to the table 78. Rotation of the table 78 causes rotation of the first eccentric cam 79 attached to the third transmission gear 164c. This movement of the cam 79 corresponds to the movement of the coil 12 during the edgewise bending of the flat wire 15.

The power transmitted via the pin wheel 133a is transmitted to a sixth anti-vibration gear 166f via a fifth anti-vibration gear 166e connected to the Geneva wheel 133b.

The crank shaft 80 is connected to the six anti-vibration gear 166f. Thus, a crank arm 80a provided at a distal end of the crank shaft 80 is rotated in sync with rotation of the sixth anti-vibration gear 166f. This movement of the crank arm 80a causes the first eccentric cam 79 to slide in correspondence to the movement of the coil 12 when the flat wire 15 is fed by the coil-long-side feed slider 41.

The power transmitted via the pin wheel 134a is transmitted to the Geneva wheel 134b and then to a third anti-vibration gear 166c connected to the Geneva wheel 134b. The power is successively transmitted to a fourth anti-vibration gear 166d.

The fourth apparatus gear 166d is connected to a fifth transmission gear 164e for power transmission to the anti-vibration jig to transmit the power to a sixth transmission gear 164f for power transmission to the anti-vibration jig, the gear 164f meshing with the fifth transmission gear 164e. The sixth transmission gear 164f is connected to the hollow shaft 81 to transmit the power to a fourth transmission gear 164d connected to the shaft 81. The fourth transmission gear 164d transmits the power to a third transmission gear 164c. Accordingly the first eccentric cam 79 causes the rotary slider mechanism 69 to slide.

As above, rotation of the eccentric cam holding table 78 causes the rotary slider mechanism 69 to rotate in sync with the edgewise bending of the flat wire 15. Rotation of the crank shaft 80 causes the rotary slider mechanism 69 to slide in sync with the movement of the coil-long-side feed slider 41. Rotation of the third transmission gear 164c causes the rotary slider mechanism 69 to slide in sync with the movement of the coil-short-side feed slider 51.

The winding operation and the anti-vibration operation of the edgewise winding apparatus 10 in the second embodiment are the same as in the first embodiment and therefore will not explained repeatedly. The details will be referred to Figs. 9 to 16 and 21 to 28.

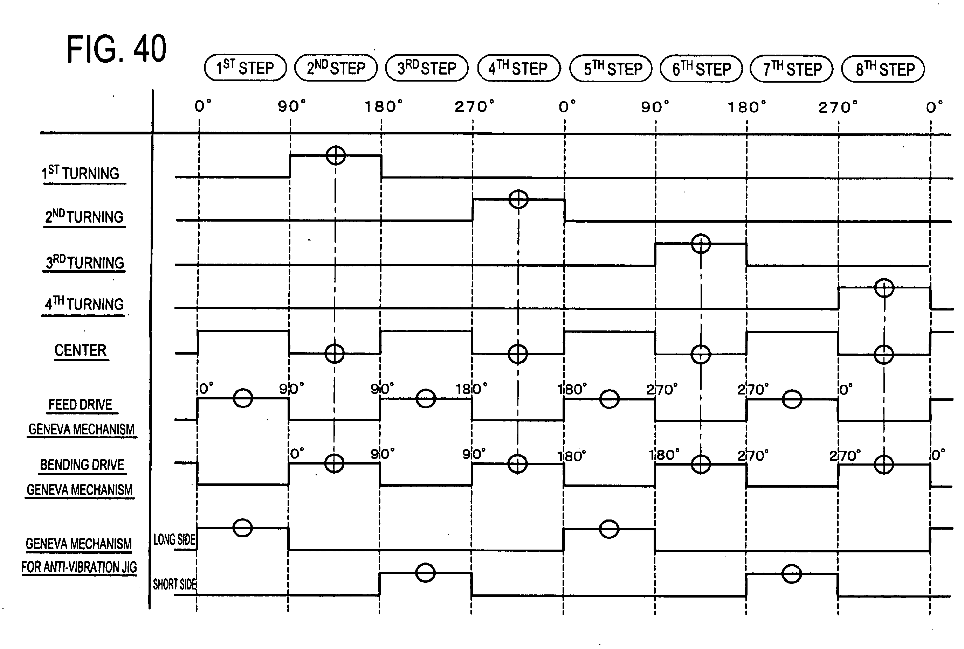

Fig. 40 is a timing chart showing the movement of the Geneva mechanism. Terms "First turning", "Second turning", "Third turning", "Fourth turning", and "Center" represent the same meaning as in Fig. 29 and the same timing. Thus, the explanation thereof is not repeated here.

A term "Feed drive Geneva mechanism" shows an operation timing of the Geneva wheel 131b for feed drive. A term "Bending drive Geneva mechanism" shows an operation timing of the coil-bending Geneva wheel 132b. A term "Long side" of "Geneva mechanism for anti-vibration jig" shows an operation timing of the Geneva wheel 133b for long-side feed of the anti-vibration jig. Furthermore, a term "Short side" shows an operation timing of the Geneva wheel 134b for short-side feed of the anti-vibration jig.

A first step is first explained. In the first step, the flat wire 15 is fed by a predetermined distance by the coil-long-side feed slider 41. The power is transmitted from the feed drive pin wheel 131a to the feed drive Geneva wheel 131b to drive the slider 41. This is because the coil-long-side feed slider 41 has been selected by the feed switching cam mechanism 50.

Furthermore, the power is transmitted from the pin wheel 133a to the Geneva wheel 133b. Thus, the rotary slide mechanism 69 is slid by the crank arm 80a, thus moving the anti-vibration jig 68 by a predetermined distance in sync with the feeding of the flat wire 15.

In a second step, the coil 12 is edgewise bent at a first turning to form the first bent portion 12c1. At that time, the holding shaft 67 is located in the lowermost position to restrict the width of the flat wire 15 so as not to increase.

The power for bending is transmitted from the pin wheel 132a to the Geneva wheel 132b and then to the rotary table 75. The rotary table 75 is thus rotated together with the bending jigs 77. The correcting motor 70 is also driven simultaneously, thereby rotating the rotary table 75 at an angle several degrees larger than 90° and returning the table 75 to the position of 90°. In this way, the flat wire 15 can reliably be edgewise bent at 90° by absorbing a returning angle resulting from spring back.

The power is transmitted from the pin wheel 132a to the Geneva wheel 132b. Accordingly, the power is then transmitted in sequence to the sixth transmission gear 163f for bending system, the first anti-vibration gear 166a, the second anti-vibration gear 166b, and the first transmission gear 164a for power transmission to the anti-vibration jig. When the eccentric cam holding table 78 is rotated, the rotary slider mechanism 69 is also rotated. The anti-vibration jig 68 is therefore rotated together with the rotary slider mechanism 69.

In a third step, the flat wire 15 is fed by a predetermined distance by the coil-short-side feed slider 51. The power is transmitted from the pin wheel 131a to the Geneva wheel 131b to drive the coil-short-side feed slider 51. This is because the coil-short-side feed slider 51 has been selected by the feed switching cam mechanism 50.

The power is transmitted from the pin wheel 134a to the Geneva wheel 134b. Accordingly, the rotary slider mechanism 69 is slid by the first eccentric cam 79, thereby moving the anti-vibration jig 68 by a predetermined distance in sync with the feeding of the flat wire 15.

In a fourth step, the coil 12 is edgewise bent at the second turning to form the second bent portion 12c2. During this step, the holding shaft 67 is located in the lowermost position to restrict the width of the flat wire 15 so as not to increase.

The power for bending is transmitted from the pin wheel 132a to the Geneva wheel 132b and then to the rotary table 75. Thus, the table 75 is rotated together with the bending jigs 77. At that time, the correcting motor 70 is also driven. Since the distance (length) of the short side portion 12a is short, the bending angle may be influenced by the first bent portion 12c1. Accordingly, the bending angle is set to be larger to reliably achieve 90° edgewise bending of the flat wire 15.

Power transmission from the pin wheel 132a to the Geneva wheel 132b causes the eccentric cam holding table 78 to rotate, thus rotating the rotary slider mechanism 69. Accordingly, the anti-vibration jig 68 is rotated together with the rotary slider mechanism 69.

In a fifth step, the flat wire 15 is fed by a predetermined distance by the coil-long-side feed slider 41. The operation of each mechanism is the same as in the first step and is not explained herein. In a sixth step, the coil 12 is edgewise bent at the third turning to form the third bent portion 12c3. The operation of each mechanism is the same as in the second step and is not explained herein.

In a seventh step, the flat wire 15 is fed by the predetermined distance by the coil-short-side feed slider 51. The operation of each mechanism is the same as in the third step and the explained thereof is omitted herein. In an eighth step, the coil 12 is edgewise bent at the fourth turning to form the fourth bent portion 12c4. The operation of each mechanism is the same as in the fourth step and the explained thereof is omitted herein. The above operations from the first to eighth steps are repeated to produce the coil 12.

The second embodiment is configured as above and exhibits the same operations as in the first embodiment. Accordingly, the following advantages are provided. Similar to the first embodiment, the apparatus 10 in the second embodiment can conduct high-speed winding of the coil 12. Shortening a lead time can reduce the number of edgewise winding apparatuses 10. This contributes to redaction in initial cost and running cost.

Moreover, for production of a coil 12 having a gradually decreasing winding diameter, the anti-vibration jig 68 including slant surfaces 68c corresponding to the slant inner surfaces of the coil 12 is inserted and rotated while sliding back and forth in the rotating direction in sync with rotation of the coil 12. Thus, the coil 12 having a trapezoidal cross section can be wound without deforming the shape thereof.

The present invention is not limited to the above embodiment(s) and may be embodied in other specific forms without departing from the essential characteristics thereof.

For instance, instead of the roller gears 90 (90a-90c) in the first embodiment and the Geneva mechanism in the second embodiment may be used, any other configuration capable of providing similar advantages to those in the first and second embodiment may be adopted.

The flat wire 15 wound on the bobbin 16 has been covered initially with insulating coating. For avoiding damage to the insulation coating, it may be arranged to produce the coil 12 from an uncoated flat wire 15 and then apply an insulating coating process to the finished coil 12.

The flat wire 15 in the above embodiments has a rectangular cross section, and, instead thereof, it may have another cross section (e.g., an oblong or elliptic cross section).

## Claims

1. A winding apparatus (10) for producing a coil (12) including a plurality of bent portions having equal bending angles and unbent portions each existing between the bent portions, the apparatus being arranged to wind a wire (15) into a non-circular forum by edgewise bending, the apparatus comprising:
a holding member (67) arranged to contact with an inner periphery surface of the wire (15) which will form an inner periphery of the coil, the holding member (67) being configured to clamp one of the bent portions (12c) of the wire (15) in a direction of thickness of the wire; and
a bending member (77) arranged to contact with an outer periphery surface of the wire (15) which will form an outer periphery of the coil (12) and rotate around the holding member (67) while holding the wire in cooperation with the holding member to bent the wire to form the bent portion,
**characterized in that**
the bending member (77) being configured to move forward and backward in a direction of lamination of the wire (15), and the bending member including a plurality of bending members (77a, b, c, d) placed at equal angular intervals around the holding member so as to be movable around the holding member (67), the number of bending members being equal to the number of bent portions or unbent portions of one turn of the coil.

2. The winding apparatus according to claim 1, further comprising an anti vibration member (68) to be placed in contact with part of the inner periphery surface of the wire (15),
the anti-vibration member (68) being rotatable in association with winding of the wire to prevent deformation of the coil (12).

3. The winding apparatus according to claim 2, wherein
the anti-vibration member (68) includes slant surfaces (68c) complying to slant side surfaces of the coil to be produced so that a winding diameter of the coil (12) is gradually decreased, and
the anti-vibration member (68) is arranged to rotate, in sync with winding of the wire, while the anti-vibration member slides forward and backward in a turning direction of the coil (12) in the process of being formed.

4. The winding apparatus according to one of claims 1 to 3, wherein
the bending member (77) includes an angle correcting system for correcting a rotation angle,
the angle correcting system (70, 94a) being arranged to correct the rotation angle of the bending member during edgewise bending of the wire.

## Patentansprüche

1. Wickelvorrichtung (10) zum Erzeugen einer Spule (12), die eine Vielzahl von mit gleichen Krümmungswinkeln gekrümmten Abschnitten und ungekrümmten Abschnitten aufweist, die sich jeweils zwischen den gekrümmten Abschnitten befinden, wobei die Vorrichtung dafür ausgelegt ist, einen Draht (15) durch Umkanten in nicht-kreisrunder Form zu wickeln, wobei die Vorrichtung aufweist:
ein Halteglied (67), das so ausgelegt ist, dass es mit einer Innenumfangsfläche des Drahts (15) in Berührung steht, die einen Innenumfang der Spule bilden wird, wobei das Halteglied (67) so aufgebaut ist, dass es einen der gekrümmten Abschnitte (12c) des Drahts (15) in Dickenrichtung des Drahts einklemmt; und
ein Biegeglied (77), das so ausgelegt ist, dass es mit einer Außenumfangsfläche des Drahts (15) in Berührung steht, die einen Außenumfang der Spule (12) bilden wird, und dass es sich um das Halteglied (67) dreht, während es den Draht zusammen mit dem Halteglied hält, um den Draht zu biegen, um den gekrümmten Abschnitt zu bilden, **dadurch gekennzeichnet, dass**
das Biegeglied (77) so aufgebaut ist, dass es sich in Schichtungsrichtung des Drahts (15) hin und her bewegt, und dass das Biegeglied eine Mehrzahl von Biegeelementen (77a, b, c, d) aufweist, die mit gleichen Winkelabständen um das Halteglied herum angeordnet sind, so dass sie sich um das Halteglied (67) herum bewegen können, wobei die Anzahl der Biegeelemente der Anzahl der gekrümmten Abschnitte oder ungekrümmten Abschnitte einer einzelnen Spulenwindung gleich ist.

2. Wickelvorrichtung nach Anspruch 1, ferner ein Schwingungsdämpfungsglied (68) aufweisend, das mit einem Teil der Innenumfangsfläche des Drahts (15) in Berührung zu bringen ist,
wobei das Schwingungsdämpfungsglied (68) im Zusammenhang mit dem Drahtwicklungsvorgang gedreht werden kann, um eine Verformung der Spule (12) zu verhindern.

3. Wickelvorrichtung nach Anspruch 2, wobei
das Schwingungsdämpfungsglied (68) schräge Oberflächen (68c) aufweist, die schrägen Seitenflächen der zu erzeugenden Spule entsprechen, so dass ein Wicklungsdurchmesser der Spule (12) allmählich abnimmt, und
das Schwingungsdämpfungsglied (68) so angeordnet ist, dass es sich synchron mit der Drahtwickelvorgang dreht, während das Schwingungsdämpfungsglied in Drehrichtung der gerade ausgebildeten Spule (12) vor und zurück gleitet.

4. Wickelvorrichtung nach einem der Ansprüche 1 bis 3, wobei
das Biegeglied (77) ein Winkelkorrektursystem zum Korrigieren eines Drehwinkels aufweist,
wobei das Winkelkorrektursystem (70, 94a) so ausgelegt ist, dass es den Drehwinkel des Biegeglieds während des Umkantens des Drahts korrigiert.

## Revendications

1. Appareil d'enroulement (10) pour produire une bobine (12) comprenant une pluralité de parties cintrées ayant des angles de cintrage identiques et des parties non cintrées existant chacune entre les parties cintrées, l'appareil étant agencé pour enrouler un fil (15) selon une forme non circulaire par cintrage de chant, l'appareil comprenant :
un élément de support (67) agencé pour entrer en contact avec une surface périphérique interne du fil (15) qui forme une périphérie interne de la bobine, l'élément de support (67) étant configuré pour serrer l'une des parties cintrées (12c) du fil (15) dans une direction d'épaisseur du fil ; et
un élément de cintrage (77) agencé pour entrer en contact avec une surface périphérique externe du fil (15) qui forme une périphérie externe de la bobine (12) et pour tourner autour de l'élément de support (67) tout en supportant le fil en coopération avec l'élément de support pour cintrer le fil afin de former la partie cintrée, **caractérisé en ce que** :
l'élément de cintrage (77) étant configuré pour se déplacer vers l'avant et vers l'arrière dans une direction de stratification du fil (15), et l'élément de cintrage comprenant une pluralité d'éléments de cintrage (77a, b, c, d) placés à intervalles angulaires identiques autour de l'élément de support afin d'être mobiles autour de l'élément de support (67), le nombre d'éléments de cintrage étant égal au nombre de parties cintrées ou de parties non cintrées d'un tour de la bobine.

2. Appareil d'enroulement selon la revendication 1, comprenant en outre un élément anti-vibration (68) destiné à être placé en contact avec une partie de la surface périphérique interne du fil (15),
l'élément anti-vibration (68) pouvant tourner en association avec l'enroulement du fil afin d'empêcher la déformation de la bobine (12).

3. Appareil d'enroulement selon la revendication 2, dans lequel :
l'élément anti-vibration (68) comprend des surfaces inclinées (68c) se conformant aux surfaces latérales inclinées de la bobine à produire de sorte qu'un diamètre d'enroulement de la bobine (12) est progressivement diminué, et
l'élément anti-vibration (68) est agencé pour tourner, en synchronisation avec l'enroulement du fil, alors que l'élément anti-vibration coulisse vers l'avant et vers l'arrière dans une direction de rotation de la bobine (12) dans le procédé de formation.

4. Appareil d'enroulement selon l'une quelconque des revendications 1 à 3, dans lequel :
l'élément de cintrage (77) comprend un système de correction d'angle pour corriger un angle de rotation,
le système de correction d'angle (70, 94a) étant agencé pour corriger l'angle de rotation de l'élément de cintrage pendant le cintrage de chant.
